# EUROPEAN PATENT APPLICATION

(11) **EP 4 629 481 A1**
(43) Date of publication of application: **08.10.2025**
(21) Application number: 25166152.6
(22) Date of filing: 25.03.2025
(51) Int. Cl.: H02K 1/20, H02K 5/20, H02K 9/197, H02K 41/03, H02K 21/22

(54) **STATOR ASSEMBLY, LINEAR MOTOR, SUSPENSION SYSTEM AND VEHICLE**

(30) Priority: 29.03.2024 CN 202410384600
(71) Applicant: BYD Company Limited, Shenzhen, Guangdong 518118 (CN)
(72) Inventor: LIU, Jun, Shenzhen (CN); MA, Bingqing, Shenzhen (CN); QI, Wenming, Shenzhen, 518118 (CN)
(74) Representative: Taor, Simon Edward William

(57) **Abstract**

The present invention discloses a stator assembly, a linear motor, a suspension system and a vehicle. The stator assembly includes: a stator mandrel and a winding component. The stator mandrel includes a mandrel wall. The mandrel wall is internally provided with a cooling water channel extending along its axial direction, and the mandrel wall is provided with a water channel opening thereon, where the water channel opening is in communication with a first end of the cooling water channel. The winding component is sleeved on an outer periphery of the stator mandrel. The cooling water channel includes a first cooling water channel, where the first cooling water channel exchanges heat with the winding component, and at least of a part of the first cooling water channel has a cross-sectional area that is greater than the area of the water channel opening. The stator assembly designed according to the present invention has fewer parts, good heat dissipation effect, and reliable operation.

## Description

### FIELD

The present invention relates to the technical field of vehicles, and specifically to a stator assembly, a linear motor, a suspension system and a vehicle.

### BACKGROUND

**In** related art, a linear motor has a rotor and a stator. Heat is generated when the linear motor operates, and the linear motor is generally naturally cooled for heat dissipation. Therefore, the heat dissipation effect for the linear motor is poor, resulting in poor operation efficiency of the linear motor. In some technologies in related art, the linear motor is additionally provided with a cooling channel, and a coolant flows in the cooling channel to exchange heat with the linear motor. However, in these technologies, the cooling channel is a separate structure from the linear motor, and has difficulty to fully exchange heat with the rotor stator of the linear motor. The linear motor has the problems of more parts, high cost, and poor cooling effect.

### SUMMARY

Embodiments of the present invention aims to at least solve one of the technical problems in the related art. To this end, an object of the present invention is to provide a stator assembly. The stator assembly designed according to the present invention has fewer parts, good heat dissipation effect, and reliable operation.

Embodiments of the present invention further provide a linear motor having the stator assembly above.

Embodiments of the present invention further provide a suspension system having the linear motor.

Embodiments of the present invention further provide a vehicle having the suspension system.

The stator assembly according to embodiments of the present invention includes: a stator mandrel, where the stator mandrel includes a mandrel wall, the mandrel wall is internally provided with a cooling water channel extending along its axial direction, the mandrel wall is provided with a water channel opening thereon, and the water channel opening is in communication with a first end of the cooling water channel; and a winding component, where the winding component is sleeved on an outer periphery of the stator mandrel. The cooling water channel includes a first cooling water channel, where the first cooling water channel exchanges heat with the winding component, and at least of a part of the first cooling water channel has a cross-sectional area that is greater than the area of the water channel opening.

According to the stator assembly in accordance with embodiments of the present invention, by providing the cooling water channel inside the mandrel wall of the stator mandrel, the stator mandrel is integrated with a cooling function, to reduce the number of parts included in the stator assembly, and reduce the manufacturing cost of the stator assembly. Moreover, the stator mandrel exchanges heat with the winding component through the first cooling water channel, and the cross-sectional area of the first cooling water channel is greater than the area of the water channel opening, to increase the contact area between the first cooling water channel and the winding component, and provide a better heat dissipation effect.

According to some embodiments of the present invention, the water channel opening is formed by the cooling water channel extending through an axial first end of the mandrel wall.

According to some embodiments of the present invention, the cooling water channel further includes a second cooling water channel. In an axial direction of the stator mandrel, the second cooling water channel and the first cooling water channel are arranged in sequence, and the water channel opening is in direct communication with the second cooling water channel.

According to some embodiments of the present invention, the cross-sectional area of the first cooling water channel is greater than the cross-sectional area of the second cooling water channel.

According to some embodiments of the present invention, the cross-sectional area of the second cooling water channel is greater than the cross-sectional area of the water channel opening.

According to some embodiments of the present invention, in a radial direction of the stator mandrel, the second cooling water channel is arranged further outward compared with the first cooling water channel. A flow guiding channel is provided between the first cooling water channel and the second cooling water channel. The wall thickness of the stator mandrel at the flow guiding channel is greater than the wall thickness of the stator mandrel at a position where the first cooling water channel is connected to the flow guiding channel.

According to some embodiments of the present invention, in a circumferential direction of the stator mandrel, multiple first cooling water channel are provided along the circumferential direction. At least two first cooling water channels are connected to the same second cooling water channel, and the sum of the cross-sectional areas of the at least two first cooling water channels is greater than the cross-sectional area of the same second cooling water channel in communication with them.

According to some embodiments of the present invention, a reinforcing rib is arranged between two adjacent first cooling water channels.

According to some embodiments of the present invention, the first cooling water channel includes a first inflow water channel segment and a first outflow water channel segment spaced apart in the circumferential direction of the stator mandrel. The first inflow water channel segment is in communication with the first outflow water channel segment at one end away from the water channel opening.

According to some embodiments of the present invention, the second cooling water channel includes a second inflow water channel segment and a second outflow water channel segment. An inlet end of the second inflow water channel segment is in communication with an inlet of the water channel opening. An outlet end of the second inflow water channel segment is in communication with an inlet end of the first inflow water channel segment. An inlet end of the second outflow water channel segment is in communication with an outlet end of the first outflow water channel segment. An outlet end of the second outflow water channel segment is in communication with an outlet of the water channel opening.

According to some embodiments of the present invention, a circumferentially corresponding central angle of the first inflow water channel segment is a first center angle α, and a circumferentially corresponding central angle of the second inflow water channel segment is a second center angle β, where α>β.

According to some embodiments of the present invention, a circumferentially corresponding central angle of the first outflow water channel segment is a first center angle α, and a circumferentially corresponding central angle of the second outflow water channel segment is a second center angle β, where α>β.

A linear motor according to an embodiment in a second aspect of the present invention will be described briefly below.

The linear motor according to the present invention includes: the stator assembly according to any one of the above embodiments and a rotor assembly, where the rotor assembly and the stator assembly can move relatively. Since the linear motor according to the present invention is arranged with the stator assembly according to the above embodiment, the linear motor has fewer parts, better heat dissipation effect, and reliable operation.

According to some embodiments of the present invention, the linear motor further includes: an electrically conductive assembly, where one end of the electrically conductive assembly is connected to the winding component, and the other end is configured to connect to a motor controller. The cooling water channel further includes a second cooling water channel. The second cooling water channel is configured to exchange heat with the electrically conductive assembly.

According to some embodiments of the present invention, the linear motor further includes: a detection device configured to detect the displacement of the rotor assembly.

According to some embodiments of the present invention, the detection device includes a sensing member and a sensing head. The sensing member is arranged on the stator mandrel, the sensing head is arranged on the rotor assembly, and the sensing head is coupled with the sensing member to detect the position of the rotor assembly.

According to some embodiments of the present invention, the sensing member is arranged on an outer peripheral wall of the stator mandrel. The stator assembly further includes a covering member, and the covering member is arranged on the stator mandrel to cover the sensing member.

According to some embodiments of the present invention, the outer peripheral wall of the stator mandrel is provided with an accommodating groove, and the sensing member is located in the accommodating groove.

According to some embodiments of the present invention, a portion of the peripheral wall of the stator mandrel is recessed inward to define the accommodating groove.

According to some embodiments of the present invention, an axial end of the accommodating groove is open to defining a mounting opening for the sensing member, and the stator assembly further includes an occluder for occluding the mounting opening.

According to some embodiments of the present invention, in the circumferential direction of the stator mandrel, the accommodating groove is staggered in position from the cooling water channel.

According to some embodiments of the present invention, the covering member is sleeved on the outer peripheral wall of the stator mandrel.

According to some embodiments of the present invention, the covering member includes a body portion and a cover plate, where the cover plate is fixed to the body portion and arranged radially facing the sensing member.

According to some embodiments of the present invention, the sensing member is a magnetic sensing member, and the covering member is made of a non-magnetically conductive material.

A suspension system according to an embodiment in a third aspect of the present invention will be described briefly below.

The suspension system according to embodiments of the present invention includes the linear motor according to any one of the above embodiments. Since the suspension system according to embodiments of the present invention is arranged with the linear motor described in the above embodiment, the suspension system has higher integration level, fewer parts, lower manufacturing cost, and better heat dissipation effect.

A vehicle according to an embodiment in a fourth aspect of the present invention will be described briefly below.

The vehicle according to embodiments of the present invention includes the suspension system according to the above embodiment. Since the vehicle according to the present invention is arranged with the suspension system described in the above embodiment, the vehicle can provide higher driving comfort and better user experience.

In summary, according to the stator assembly in accordance with embodiments of the present invention, the stator mandrel is integrated with a cooling function. As a result, the stator assembly may have fewer parts, lower manufacturing cost, and better heat dissipation effect.

The additional aspects and advantages of the present invention will be set forth in part in the description below, some of which will become apparent from the following description, or will be understood by the practice of the present invention.

### BRIEF DESCRIPTION OF THE DRAWINGS

The above described and additional aspects and advantages of embodiments of the present invention will become apparent and more readily comprehensible from the following descriptions of the embodiments made with reference to the drawings, where
FIG. 1 shows an overall structure of a linear motor according to an embodiment of the present invention.
FIG. 2 is a cross-sectional view showing a partial structure of a linear motor according to an embodiment of the present invention.
FIG. 3 is an enlarged view of an encircled part A in FIG. 2.
Fig. 4 is an enlarged view of a partial structure shown in FIG. 2.
FIG. 5 shows an overall structure of a stator assembly according to an embodiment of the present invention.
FIG. 6 is a schematic view showing a partial structure of a stator assembly according to an embodiment of the present invention.
FIG. 7 is an enlarged view of an encircled part B in FIG. 6.
FIG. 8 is a schematic view showing the structure at a connection of an adapter and an electrically conductive assembly according to an embodiment of the present invention.
FIG. 9 is a schematic view showing the structure of an adapter according to an embodiment of the present invention.
FIG. 10 is a schematic view showing the structure of a winding component according to an embodiment of the present invention.
FIG. 11 is a schematic view showing the structure of a portion of a coil disc according to an embodiment of the present invention.
FIG. 12 is a schematic view showing the structure of a porting of stator mandrel fitting to a winding component according to an embodiment of the present invention.
Fig. 13 is a cross-sectional view of the structure shown in FIG. 11.
FIG. 14 is a schematic view showing the structure of a stator core according to an embodiment of the present invention.
FIG. 15 is an enlarged view of an encircled part D in FIG. 13.
FIG. 16 is a schematic view showing the electrical connection between some electrically insulating frameworks according to an embodiment of the present invention.
FIG. 17 is a schematic view showing the distance between bridge-type wire slots according to an embodiment of the present invention.
FIG. 18 is a view showing the structure of a stator mandrel according to an embodiment of the present invention.
FIG. 19 is a top view of a stator mandrel according to an embodiment of the present invention.
FIG. 20 shows the structure in FIG. 18 viewed from another perspective.
FIG. 21 is a schematic view showing a sensing member arranged on an outer surface of a stator mandrel according to an embodiment of the present invention.
FIG. 22 shows the structure in FIG. 21 viewed from another perspective.
FIG. 23 is a schematic view showing the structure of a covering member according to an embodiment of the present invention.
FIG. 24 is a schematic view showing the structure of a split covering member according to an embodiment of the present invention.
FIG. 25 is a schematic view showing the structure of an electrically conductive assembly according to an embodiment of the present invention.
FIG. 26 is an enlarged view of an encircled part C in FIG. 25.
FIG. 27 shows the structure in FIG. 25 viewed from a second perspective.
FIG. 28 shows the structure in FIG. 25 viewed from a third perspective.
FIG. 29 is a partial cross-sectional view showing the structure of a stator mandrel according to an embodiment of the present invention.
FIG. 30 is a schematic view showing the structure of a water channel joint according to an embodiment of the present invention.
FIG. 31 is a cross-sectional view of a stator mandrel according to an embodiment of the present invention.
FIG. 32 shows the structure in FIG. 31 viewed from another perspective.
FIG. 33 is a schematic view of a cooling water channel (virtual) inside a mandrel wall of a stator mandrel according to an embodiment of the present invention.
FIG. 34 is a schematic diagram of a suspension system according to an embodiment of the present invention.
FIG 35 is a schematic view of a vehicle according to an embodiment of the present invention.

### DETAILED DESCRIPTION

Detail description of the embodiments of the present invention will be made in the following, and examples thereof are illustrated in the drawings, where the same or similar elements or the elements having the same or similar functions are denoted by the same or similar reference numerals throughout the description. The embodiments described below with reference to the accompanying drawings are exemplary and are only used to interpret the present invention, instead of limiting the present invention.

In the descriptions of the present invention, it should be understood that directions or location relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", and "counterclockwise" are directions or location relationships shown based on the accompanying drawings, are merely used for the convenience of describing the present invention and simplifying the description, but are not used to indicate or imply that a device or an element must have a particular direction, or must be constructed and operated in a particular direction, and therefore, cannot be understood as a limitation to the present invention.

Additionally, the terms "first", and "second" are used merely for the purpose of description, and shall not be construed as indicating or implying relative importance or implying a quantity of indicated technical features. Therefore, a feature restricted by "first" or "second" may explicitly or implicitly include one or more of the features. In the descriptions of the present invention, "multiple" means at least two, for example, two or three, unless explicitly specified.

In the present invention, unless otherwise clearly specified and defined, the terms "mounting", "connection", "connect", and "fix" should be understood in a broad sense. For example, the connection may be a fixed connection, a detachable connection, or an integral connection; or the connection may be a mechanical connection or an electrical connection or may communicate with each other; or the connection may be a direct connection, or an indirect connection via an intermediate structure; internal communication between two components, or an interaction relationship between two components. For those of ordinary skill in the art, specific meanings of the above terms in the present invention can be understood according to specific circumstances.

In the present invention, unless otherwise clearly specified and defined, a first feature being "on" or "under" a second feature may include that the first and second features are in direct contact, or may include that the first and second features are not in direct contact but in contact with the aid of other features therebetween. In addition, a first feature being "on", "above" or "over" a second feature includes that the first feature is right above or obliquely above the first feature, or merely indicates that a level of the first feature is higher than that of the second feature. A first feature being "below", "under", or "beneath" a second feature includes that the first feature is right below or obliquely below the second feature, or merely indicates that a level of the first feature is lower than that of the second feature.

In related art, a linear motor has a rotor and a stator. Heat is generated when the linear motor operates, and the linear motor is generally naturally cooled for heat dissipation. Therefore, the heat dissipation effect for the linear motor is poor, resulting in poor operation efficiency of the linear motor. In some technologies in related art, the linear motor is additionally provided with a cooling channel, and a coolant flows in the cooling channel to exchange heat with the linear motor. However, in these technologies, the cooling channel is a separate structure from the linear motor, and has difficulty to fully exchange heat with the rotor stator of the linear motor. The linear motor has the problems of more parts, high cost, and poor cooling effect.

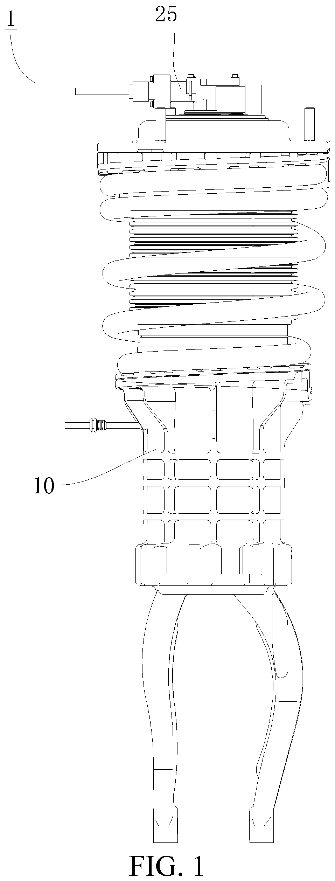

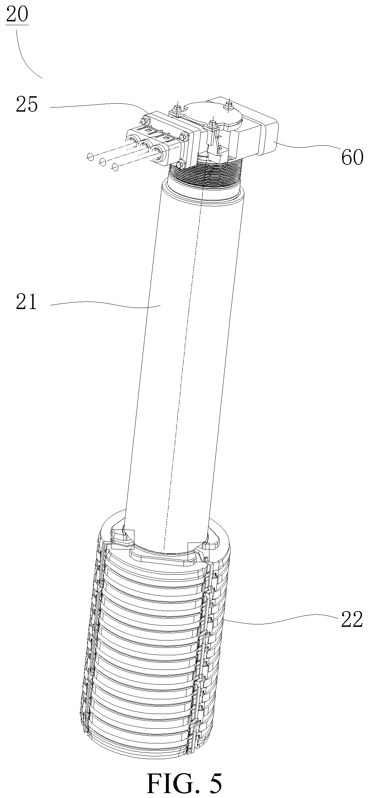

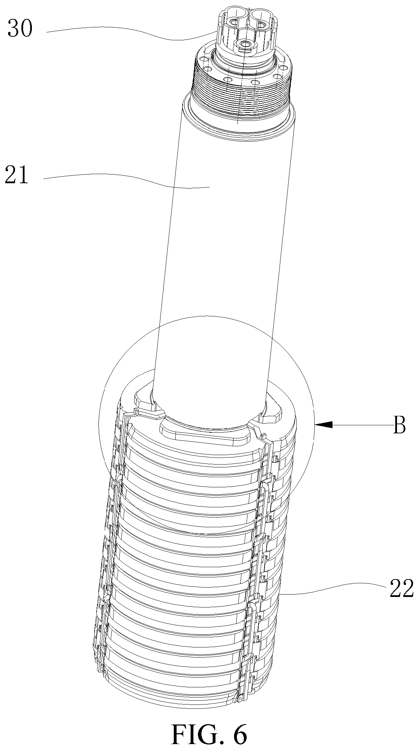

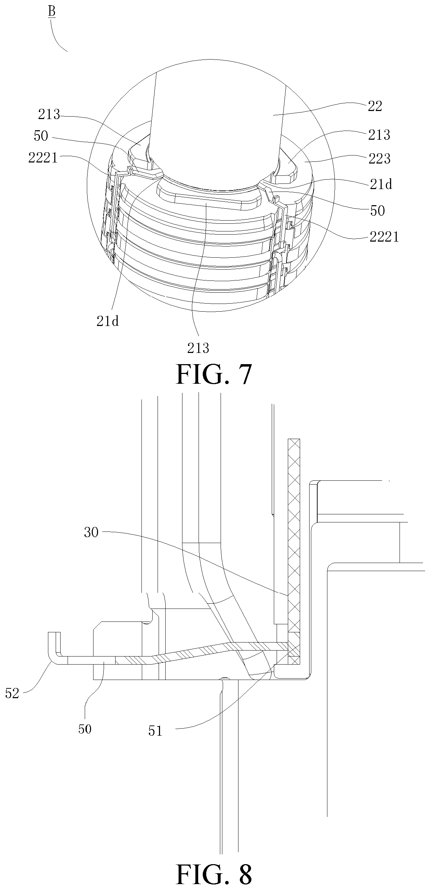

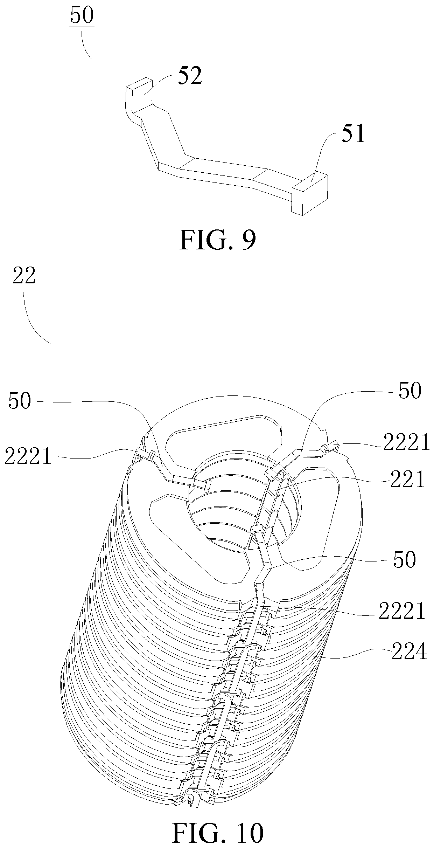

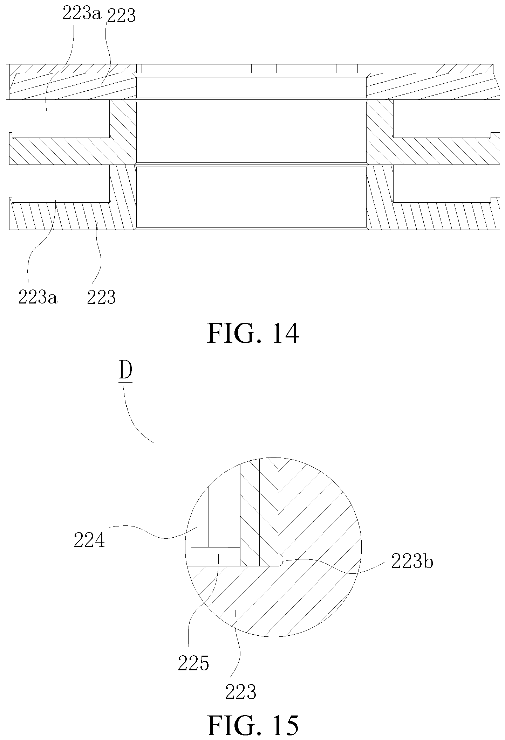

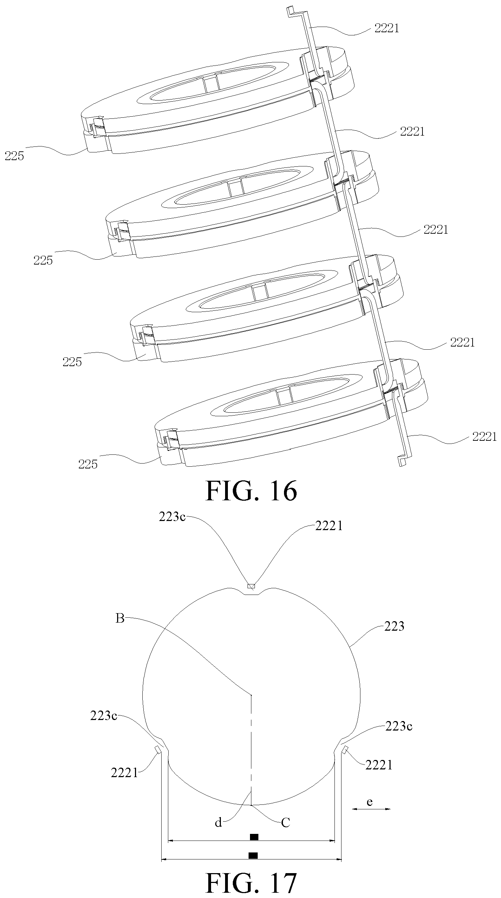

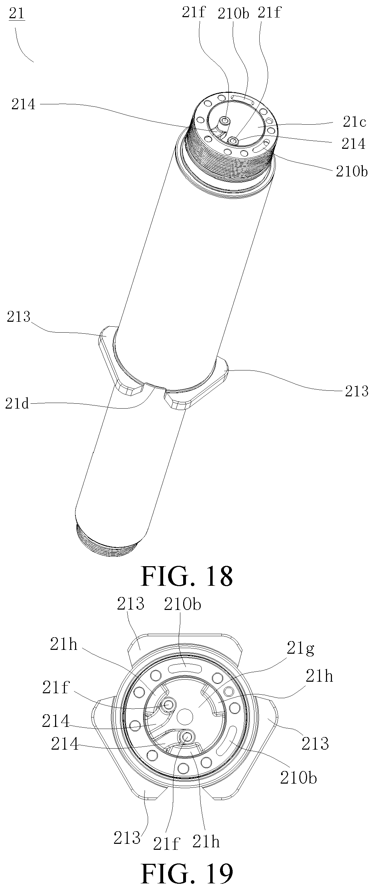

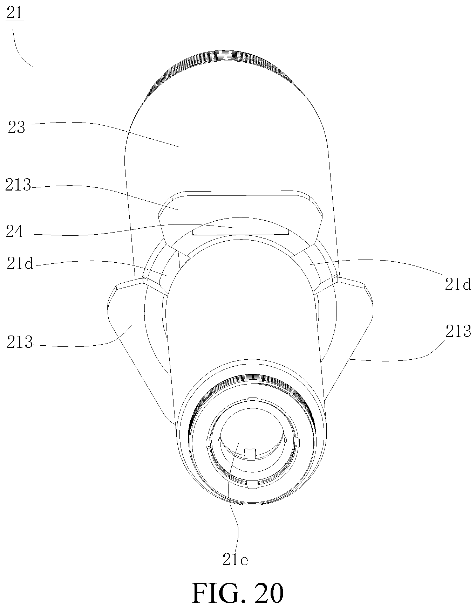

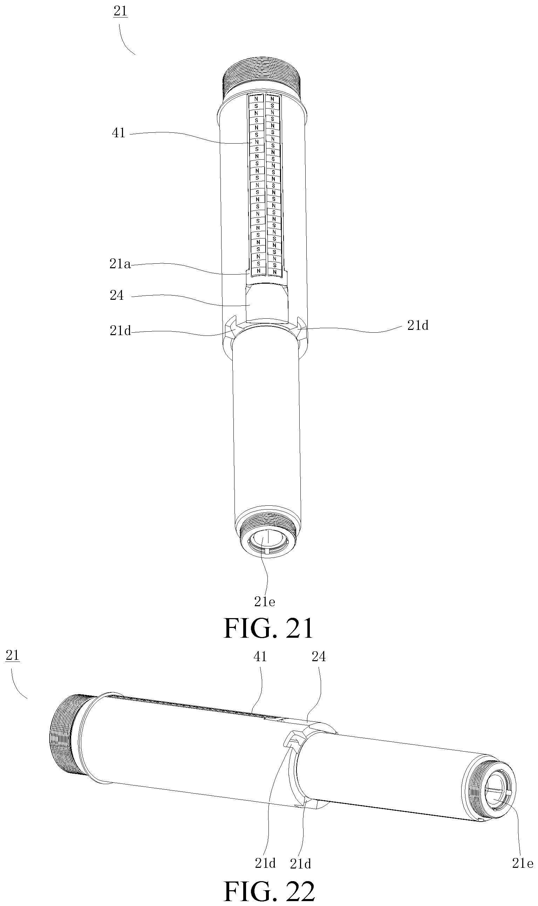

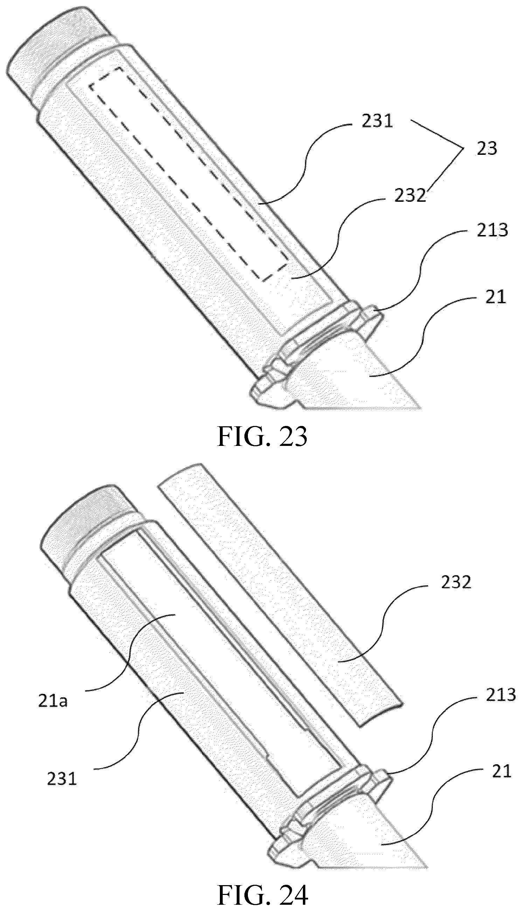

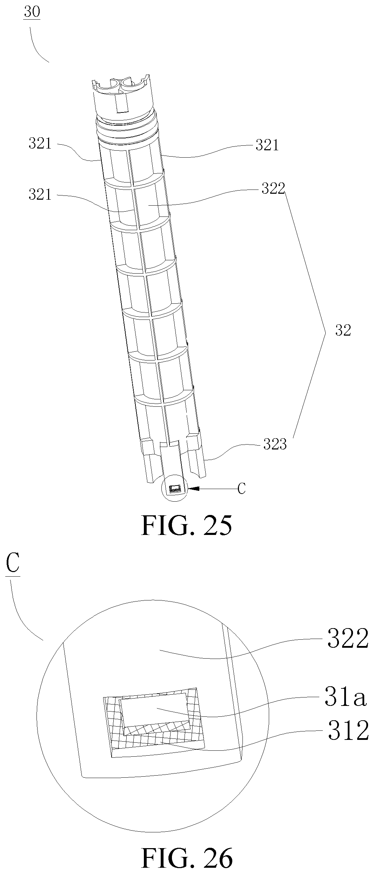

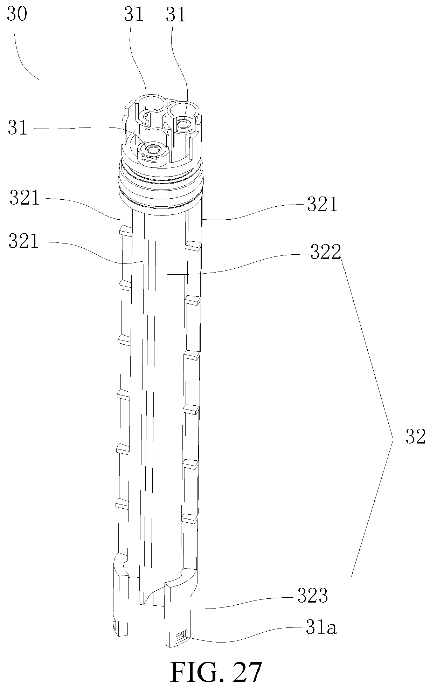

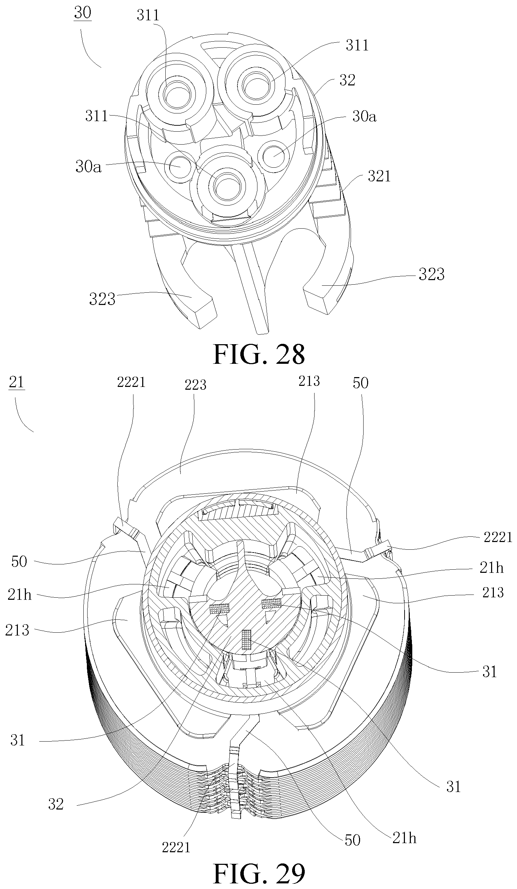

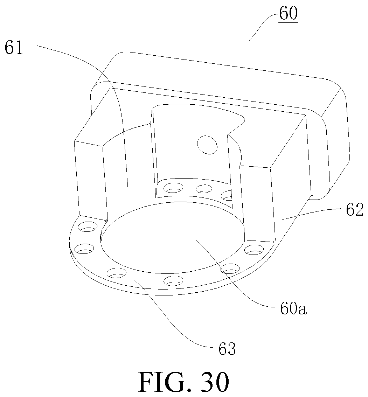

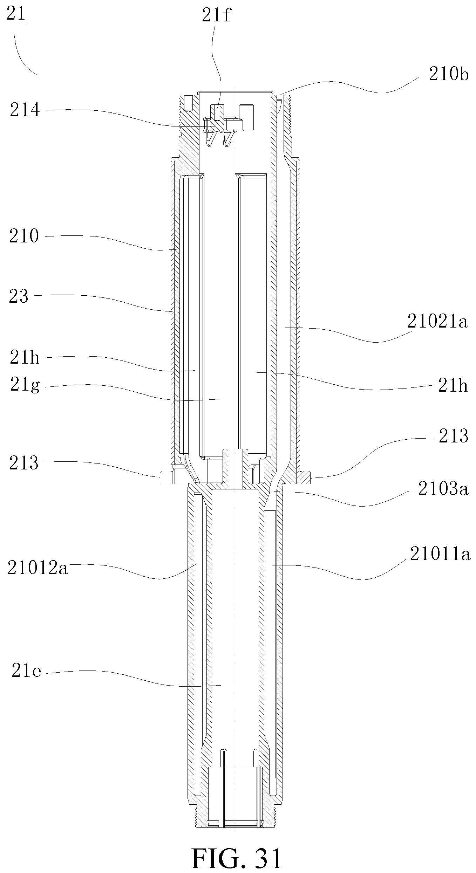

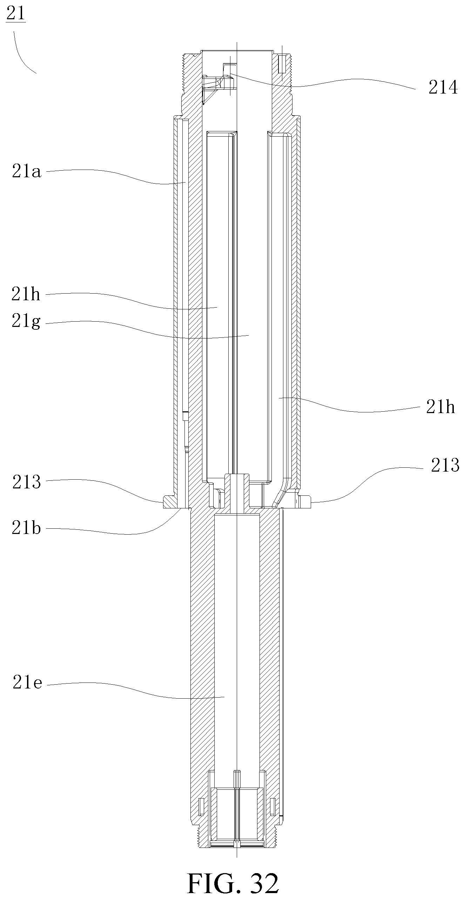

A stator assembly 20 according to an embodiment of the present invention will be described below with reference to FIGs. 1 to 33.

The stator assembly 20 according to embodiments of the present invention includes: a stator mandrel 21 and a winding component 22. The stator mandrel 21 includes a mandrel wall 210. The mandrel wall 210 is internally provided with a cooling water channel extending along its axial direction, and the mandrel wall 210 is provided with a water channel opening 210b thereon, where the water channel opening 210b is in communication with a first end of the cooling water channel. The winding component 22 is sleeved on an outer periphery of the stator mandrel 21. The cooling water channel includes a first cooling water channel 2101a, where the first cooling water channel 2101a exchanges heat with the winding component 22, and at least of a part of the first cooling water channel 2101a has a cross-sectional area that is greater than the area of the water channel opening 210b. Specifically, heat is generated during the operation of the winding component 22. By providing a cooling water channel inside the mandrel wall 210 of the stator mandrel 21, the stator mandrel 21 included in the stator assembly 20 can be used as a cooling structure, to enable the stator mandrel 21 to be integrated with a cooling function. By increasing the function of the stator assembly 20, the stator assembly 20 has no need to be additionally arranged with a cooling structure for the winding component 22, to reduce the number of parts included in the stator assembly 20, and reduce the manufacturing cost of the stator assembly 20.

Moreover, the stator mandrel 21 may be in close contact with the winding component 22, so that the stator mandrel 21 can fully exchange heat with the winding component 22, thereby improving the cooling effect on the winding component 22 and improving the operational reliability and efficiency of the stator assembly 20.

More specifically, the cooling water channel is provided inside the mandrel wall 210 and includes a first cooling water channel 2101a adapted for heat exchange with the winding component 22. It can be understood that since the cooling water channel is limited by the space inside the mandrel wall 210, the first cooling water channel 2101a has limited mounting space. To ensure the heat exchange effect between the first cooling water channel 2101a and the winding component 22, the first cooling water channel 2101a needs to cover a large area of the mandrel wall 210, to increase the contact area between the first cooling water channel 2101a and the winding component 22, and improve the heat dissipation effect for the winding component 22. Therefore, in an axial direction 21 of the stator mandrel, the first cooling water channel 2101a has a cross-sectional area that is greater than the area of the water channel opening 210b. By arranging the first cooling water channel 2101a having a cross-sectional area that is greater than the area of the water channel opening 210b, the water inflow pressure at the water channel opening 210b can be reduced, to ensure the operational stability of the stator mandrel 21.

According to the stator assembly 20 in accordance with the present invention, by providing a cooling water channel inside the mandrel wall 210 of the stator mandrel 21, the stator mandrel 21 is enabled to be integrated with a cooling function, to reduce the number of parts included in the stator assembly 20, and reduce the manufacturing cost of the stator assembly 20. Moreover, the stator mandrel 21 exchanges heat with the winding component 22 through the first cooling water channel 2101a, and the first cooling water channel 2101a has a cross-sectional area that is greater than the area of the water channel opening 210b, so that the contact area between the first cooling water channel 2101a and the winding component 22 is increased, to provide a better heat dissipation effect.

In some embodiments, the water channel opening 210b can be provided on a surface of the mandrel wall 210 in the axial direction, or on a surface of the mandrel wall 210 in a circumferential direction.

According to some embodiments of the present invention, the water channel opening 210b is formed by the cooling water channel extending through an axial first end of the mandrel wall 210. Here, the water channel opening 210b may refer to an inlet and an outlet of the cooling water channel. The water channel opening 210b is located at one end of the mandrel wall 210 in the axial direction. At this time, the cooling water channel is repeatedly arranged in the axial direction of the stator mandrel 21. A cooling medium flowing into the cooling water channel from the inlet of the cooling water channel flows from the axial first end to an axial second end of the stator mandrel 21, and then from the axial second end to the axial first end of the stator mandrel 21. After full heat exchange, the cooling medium flows out of the cooling water channel through the outlet of the cooling water channel located at the axial first end of the stator mandrel 21. Therefore, the cooling water channel is longer, to extend the flow path of the cooling medium, increase the flow time of the cooling medium, increase the heat exchange time of the cooling medium, and improve the heat exchange effect of the cooling water channel.

It can be understood that the stator assembly 20 according to embodiments of the present invention is applicable to a linear motor 1. In the stator assembly 20 according to embodiments of the present invention, by providing the water channel opening 210b at the axial first end of the stator mandrel 21, the design of other structural features of the stator mandrel 21 and the arrangement of other structures of the linear motor 1 are facilitated.

According to some embodiments of the present invention, the cooling water channel further includes a second cooling water channel 2102a. In the axial direction 21 of the stator mandrel, the second cooling water channel 2102a and the first cooling water channel 2101a are arranged in sequence, and the water channel opening 210b is in direct communication with the second cooling water channel 2102a. Here, in a direction from the axial first end of the mandrel wall 210 to the axial second end of the mandrel wall 210, the second cooling water channel 2102a and the first cooling water channel 2101a are arranged in sequence, where the second cooling water channel 2102a is located upstream in the cooling water channel, and the first cooling water channel 2101a is located downstream in the cooling water channel. The position where the first cooling water channel 2101a is located corresponds to a first portion of the stator mandrel 21. The first portion of the stator mandrel 21 may be arranged with a first-portion structural member. The first cooling water channel 2101a can exchange heat with the first-portion structural member. In some embodiments, the first-portion structural member includes the winding component 22. The position where the second cooling water channel 2102a is located corresponds to a second portion of the stator mandrel 21. The second portion of the stator mandrel 21 may be arranged with a second-portion structural member. The second cooling water channel 2102a can exchange heat with the second-portion structural member. In some embodiments, the second-portion structural member includes an electrically conductive assembly 30. Multiple types of cooling water channels are provided inside the mandrel wall 210 of the stator mandrel 21, which can exchange heat with multiple structures, to meet the heat exchange requirements of the multiple structures, and ensure the heat exchange effect of an apparatus arranged with the stator assembly 20. Therefore, the device is ensured to operate normally.

According to some embodiments of the present invention, the cross-sectional area of the first cooling water channel 2101a is greater than the cross-sectional area of the second cooling water channel 2102a. It can be understood that since the cooling water channel is provided inside the mandrel wall 210 of the stator mandrel 21, to ensure the structural strength of the mandrel wall 210, the dimension of the cooling water channel in a radial direction of the mandrel wall 210 cannot be too large. To ensure the flow rate of the cooling medium in the cooling water channel to ensure the heat exchange effect of the cooling water channel, the dimension of the cooling water channel in the radial direction of the mandrel wall 210 cannot be too small. Therefore, the first cooling water channel 2101a is designed to have a cross-sectional area that is greater than the cross-sectional area of the second cooling water channel 2102a, to ensure the structural strength of the stator mandrel 21 while the heat exchange effect for the winding component 22 is ensured.

In some embodiments, the second cooling water channel 2102a also has a cross-sectional area that is greater than the area of the water channel opening 210b, to ensure the heat exchange effect between the second cooling water channel 2102a and other structural members.

In some embodiments, in the axial direction of the stator mandrel 21, an angle is formed between a line of connection of the first cooling water channel 2101a with an axis of the stator mandrel 21 and a line of connection of the second cooling water channel 2102a with the axis of the stator mandrel 21. The first cooling water channel 2101a and the second cooling water channel 2102a are arranged in the axial direction of the stator mandrel 21 and staggered in a circumferential direction of the stator mandrel 21, such that the cooling water channel covers a larger area of the stator mandrel 21, to increase the heat exchange area of the cooling water channel on the mandrel wall 210 of the stator mandrel 21, and improve the heat exchange effect of the cooling water channel.

According to some embodiments of the present invention, in the radial direction of the stator mandrel 21, the second cooling water channel 2102a is arranged further outward compared with the first cooling water channel 2101a. A flow guiding channel 2103a is provided between the first cooling water channel 2101a and the second cooling water channel 2102a. The wall thickness of the stator mandrel 21 at the flow guiding channel 2103a is greater than the wall thickness of the stator mandrel 21 at a position where the first cooling water channel 2101a is connected to the flow guiding channel 2103a. Specifically, the flow guiding channel 2103a is arranged obliquely towards the axis of the stator mandrel 21 in a direction from the second cooling water channel 2102a to the first cooling water channel 2101a, to connect the second cooling water channel 2102a and the first cooling water channel 2101a. It can be understood that due to the oblique arrangement of the flow guiding channel 2103a, to ensure the structural strength of the stator mandrel 21, the wall thickness of the stator mandrel 21 at the flow guiding channel 2103a is designed to be greater than the wall thickness of the stator mandrel 21 at a position where the first cooling water channel 2101a is connected to the flow guiding channel 2103a. This improves the structural strength of the stator mandrel 21, avoids the local fracture of the stator mandrel 21 due to the design of the cooling water channel, and reduces the probability of failure of the mandrel wall 210 by increasing the local structural strength of the mandrel wall 210.

In some embodiments, the portion of the stator mandrel 21 provided with the second cooling water channel 2102a is larger in dimension in the radial direction than the portion of the stator mandrel 21 provided with the first cooling water channel 2101a. The interior of the portion of the stator mandrel 21 provided with the second cooling water channel 2102a may be a hollow structure, to accommodate other structures. The second cooling water channel 2102a can exchange heat with these structures.

In some embodiments, the portion of the stator mandrel 21 provided with the first cooling water channel 2101a is smaller in dimension in the radial direction than the portion of the stator mandrel 21 provided with the second cooling water channel 2102a. Therefore, the winding component 22 can be sleeved on the portion of the stator mandrel 21 where the first cooling water channel 2101a is provided.

According to some embodiments of the present invention, in the circumferential direction of the stator mandrel 21, multiple first cooling water channel are provided 2101a along the circumferential direction. At least two first cooling water channels 2101a are connected to the same second cooling water channel 2102a, and the sum of the cross-sectional areas of the at least two first cooling water channels 2101a is greater than the cross-sectional area of the same second cooling water channel 2102a in communication with them. Specifically, the multiple first cooling water channels 2101a provided along the circumferential direction of the stator mandrel 21 can increase the contact area between the cooling water channels and the winding component 22, thereby increasing the heat exchange area between the cooling water channel and the winding component 22, and improving the heat exchange effect of the cooling water channel for the winding component 22. In some embodiments, the cooling medium can enter multiple first cooling water channels 2101a from one second cooling water channel 2102a, to reduce the cooling water channel provided inside the mandrel wall 210, and ensure the structural strength of the stator mandrel 21 while the cooling effect for the winding component 22 is improved.

Moreover, the sum of the cross-sectional areas of the multiple first cooling water channels 2101a in communication with the same second cooling water channel 2102a is greater than the cross-sectional area of the second cooling water channel 2102a, to further reduce the water inflow pressure at the water channel opening 210b and ensure the operational stability of the stator mandrel 21.

According to some embodiments of the present invention, a reinforcing rib is arranged between two adjacent first cooling water channels 2101a. It can be understood that since the first cooling water channels 2101a are provided inside the mandrel wall 210, the multiple first cooling water channels 2101a will reduce the structural strength of the mandrel wall 210. Therefore, a reinforcing rib is arranged between two adjacent first cooling water channels 2101a, to enhance the structural strength of the mandrel wall 210.

In some embodiments, an inner wall of the first cooling water channel 2101a may also be arranged with a reinforcing rib structure.

According to some embodiments of the present invention, the first cooling water channel 2101a includes a first inflow water channel segment 21011a and a first outflow water channel segment 21012a spaced apart in the circumferential direction of the stator mandrel 21. An outlet end of the first inflow water channel segment 21011a and an inlet end of the first outflow water channel segment 21012a are located at the same end of the stator mandrel 21, and the first inflow water channel segment 21011a is in communication with the first outflow water channel segment 21012a at one end away from the water channel opening 210b. Specifically, the outlet end of the first inflow water channel segment 21011a and the inlet end of the first outflow water channel segment 21012a are located and in communication at the axial second end of the mandrel wall 210. In a direction of the cooling medium flowing from the axial first end of the mandrel wall 210 towards the axial second end of the mandrel wall 210, the water channel opening 210b is in communication with the first inflow water channel segment 21011a of the first cooling water channel 2101a; and in a direction of the cooling medium flowing from the axial second end of the mandrel wall 210 towards the axial first end of the mandrel wall 210, the first outflow water channel segment 21012a of the first cooling water channel 2101a is in communication with the water channel opening 210b, to form a loop-type cooling water channel, so as to extend the flow path of the cooling medium, increase the flow time of the cooling medium in the cooling water channel, increase the heat exchange time of the cooling medium, and improve the heat exchange effect of the cooling medium.

According to some embodiments of the present invention, the second cooling water channel 2102a includes a second inflow water channel segment 21021a and a second outflow water channel segment 21022a. An inlet end of the second inflow water channel segment 21021a is in communication with an inlet of the water channel opening 210b. An outlet end of the second inflow water channel segment 21021a is in communication with an inlet end of the first inflow water channel segment 21011a. An inlet end of the second outflow water channel segment 21022a is in communication with an outlet end of the first outflow water channel segment 21012a. An outlet end of the second outflow water channel segment 21022a is in communication with an outlet of the water channel opening 210b. Specifically, multiple cooling water channels can be configured. Each cooling water channel includes one second cooling water channel 2102a and one or more first cooling water channels 2101a in communication with the second cooling water channel 2102a. In the direction of the cooling medium flowing from the axial first end of the mandrel wall 210 towards the axial second end of the mandrel wall 210, the water channel opening 210b is in communication with the first inflow water channel segment 21011a through the second inflow water channel segment 21021a. In the direction of the cooling medium flowing from the axial second end of the mandrel wall 210 towards the axial first end of the mandrel wall 210, the first outflow water channel segment 21012a is in communication with the water channel opening 210b through the second outflow water channel segment 21022a. In this case, the length of the cooling water channel is longer, to extend the flow path of the cooling medium, increase the flow time of the cooling medium, increase the heat exchange time of the cooling medium, and improve the heat exchange effect of the cooling medium.

According to some embodiments of the present invention, a circumferentially corresponding central angle of the first cooling water channel 2101a is a first center angle α, and a circumferentially corresponding central angle of the second cooling water channel 2102a is a second center angle β, where α>β. Here, the proportion of the first cooling water channel 2101a in the circumferential direction of the stator mandrel 21 is larger than the proportion of the second cooling water channel 2102a in the circumferential direction of the stator mandrel 21. In this way, the cooling performance of the cooling water channel for the stator mandrel 21 incline to the section where the first cooling water channel 2101a is located. During assembly of the stator mandrel 21, parts of high heat generation can be arranged on the section where the first cooling water channel 2101a is located, and during assembly of the stator mandrel 21, parts of low heat generation can be arranged on the section the second cooling water channel 2102a is located. In this manner, the cooling water channel can distribute the cooling capacity on demand, to improve the heat dissipation and cooling effect. The proportion of the second cooling water channel 2102a on the mandrel wall 210 is small, which reduces the influence on the structural strength of the stator mandrel 21.

With this arrangement, the distribution of the cooling water channel on the stator mandrel 21 can take the distribution of cooling capacity on demand the structural strength of the stator mandrel 21 into consideration.

In some embodiments, multiple first cooling water channels 2101a are configured, and the first center angle α is the sum of the circumferentially corresponding central angles of various first cooling water channels 2101a.

In some embodiments, multiple second cooling water channels 2102a are configured, and the second center angle β is the sum of the circumferentially corresponding central angles of various second cooling water channels 2102a.

The multiple first cooling water channels 2101a and the multiple second cooling water channels 2102a are all branches of the cooling water channel. In the process of the cooling medium flowing in the cooling water channel, as the number of each branch of the cooling water channel increases, the proportion of each branch of the cooling water channel in the circumferential direction of the stator mandrel 21 increases, to further improve the heat dissipation performance of the stator mandrel 21 and improve the heat dissipation efficiency.

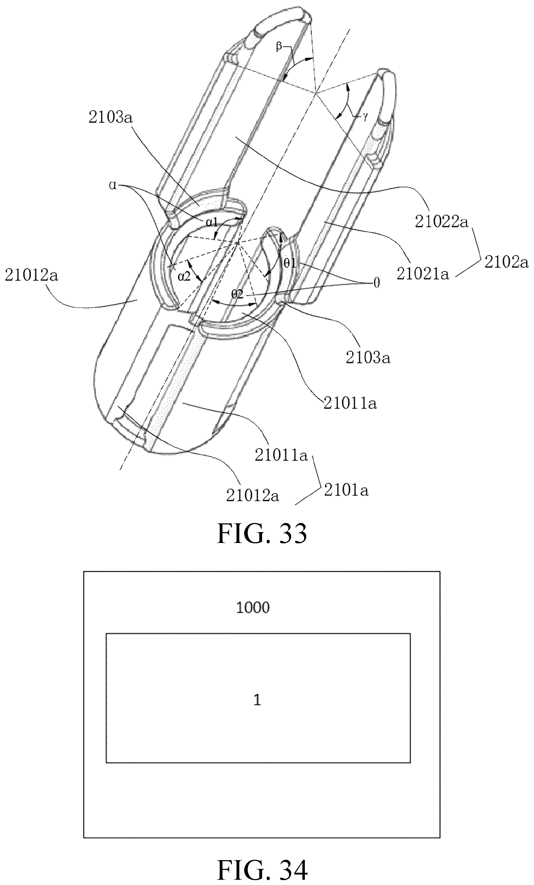

In the embodiment shown in FIG. 33, two first cooling water channel 2101a are provided. The circumferentially corresponding central angle of one first cooling water channel 2101a is α1, and the circumferentially corresponding central angle of the other first cooling water channel 2101a is α2. The first center angle α is the sum of the circumferentially corresponding central angle α1 of the one first cooling water channel 2101a and the circumferentially corresponding central angle α2 of the other first cooling water channel 2101a. That is, α, α1, and α2 meet the following equation: α=α1+α2. One second cooling water channel 2102a is provided, and the second center angle of the second cooling water channel 2102a is β. The first center angle α is greater than the second center angle β. That is, the proportion of the first cooling water channel 2101a in the circumferential direction of the stator mandrel 21 is greater than that of the second cooling water channel 2102a in the circumferential direction of the stator mandrel 21. This increases the contact area between the cooling medium and the stator mandrel 21, and improves the heat dissipation performance and heat dissipation efficiency.

According to some embodiments of the present invention, as shown in FIG. 33, the circumferentially corresponding central angle of the first outflow water channel segment 21012a is a first center angle α , and the circumferentially corresponding central angle of the second outflow water channel segment 21022a is a second center angle β , where α> β . That is to say, the proportion of the first outflow water channel segment 21012a in the circumferential direction of the stator mandrel 21 is larger than the proportion of the second outflow water channel segment 21022a in the circumferential direction of the stator mandrel 21. The proportion of the second outflow water channel segment 21022a in the circumferential direction of the stator mandrel 21 is small, which reduces the influence on the structural strength of the stator mandrel 21. The proportion of the first outflow water channel segment 21012a in the circumferential direction of the stator mandrel 21 is large, which increases the proportion of the first outflow water channel segment 21012a in the circumferential direction of the stator mandrel 21, enlarges the contact area between the cooling medium and the stator mandrel 21, and improves the heat dissipation performance and heat dissipation efficiency of the stator mandrel 21.

In the embodiment shown in FIG. 33, two first outflow water channel segments 21012a are provided. The circumferentially corresponding central angle of one first outflow water channel segment 21012a is α 1, and the circumferentially corresponding central angle of the other first outflow water channel segment 21012a is α 2. The first center angle α is the sum of the circumferentially corresponding central angle α 1 of the one first outflow water channel segment 21012a and the circumferentially corresponding central angle α 2 of the other first outflow water channel segment 21012a. That is, α , α 1, and α 2 meet the following equation: α = α 1+ α 2. One second outflow water channel segment 21022a is provided, and the second center angle of the second outflow water channel segment 21022a is β . The the first center angle α is larger than the second center angle β . That is, the proportion of the first outflow water channel segment 21012a in the circumferential direction of the stator mandrel 21 is larger than the proportion of the second outflow water channel segment 21022a in the circumferential direction of the stator mandrel 21. This increases the contact area between the cooling medium and the stator mandrel 21, and improves the heat dissipation performance and heat dissipation efficiency.

In some embodiments, the stator assembly 20 is applicable to a linear motor 1, and the linear motor 1 is applicable to a vehicle 10000. The water channel opening 210b of the stator mandrel 21 is connected to the cooling loop of the vehicle, to form a closed cooling loop.

In some embodiments of the present invention, the stator assembly 20 includes a stator mandrel 21 and a winding component 22. The stator mandrel 21 includes a mandrel wall 210. The mandrel wall 210 is internally provided with multiple cooling water channel extending along a radial direction of the mandrel wall 210. An inlet and an outlet of the cooling water channel are formed at an axial first end of the mandrel wall 210. In a direction from the axial first end of the mandrel wall 210 to an axial second end of the mandrel wall 210, an inflow water channel portion of the cooling water channel includes a second inflow water channel segment 21021a of a second cooling water channel 2102a a flow guiding channel 2103a, and a first inflow water channel segment 21011a of a first cooling water channel 2101a, in communication with the inlet of the cooling water channel and connected in sequence. In a direction from the axial second end of the mandrel wall 210 to the axial first end of the mandrel wall 210, An outflow water channel portion of the cooling water channel includes a first outflow water channel segment 21012a of the first cooling water channel 2101a, a flow guiding channel 2103a, and a second outflow water channel segment 21022a of the second cooling water channel 2102a, in communication with the first inflow water channel segment 21011a of the first cooling water channel 2101a and connected in sequence. The second outflow water channel segment 21022a of the second cooling water channel 2102a is in communication with the outlet of the cooling water channel. The flow guiding channel 2103a is arranged obliquely towards the axis of the stator mandrel 21 in a direction from the second cooling water channel 2102a to the first cooling water channel 2101a, to connect the second cooling water channel 2102a and the first cooling water channel 2101a. The winding component 22 is sleeved on an outer periphery of a portion of the stator mandrel 21 where the first cooling water channel 2101a is provided, so that the first cooling water channel 2101a exchanges heat with the winding component 22.

The first cooling water channel 2101a and the second cooling water channel 2102a are arranged in the axial direction of the stator mandrel 21 and staggered in the circumferential direction of the stator mandrel 21, such that the cooling water channel covers a larger area of the stator mandrel 21. Moreover, the first cooling water channel 2101a has a larger proportion than the second cooling water channel 2102a in the circumferential direction of the stator mandrel 21, the first cooling water channel 2101a has a larger coverage area in the circumferential direction of the stator mandrel 21, to improve the heat exchange effect at a position of the stator mandrel 21 provided with the first cooling water channel 2101a.

Furthermore, to reduce the water inflow pressure at the water channel opening 210b and ensure the heat exchange effect of the cooling water channel, the second cooling water channel 2102a is designed to have a cross-sectional area that is greater than the cross-sectional area of the water channel opening 210b, and the first cooling water channel 2101a is designed to have a cross-sectional area that is greater than the cross-sectional area of the second cooling water channel 2102a. The sum of the cross-sectional areas of multiple first cooling water channels 2101a in communication with the same second cooling water channel 2102a is greater than the cross-sectional area of the second cooling water channel 2102a, to further reduce the water inflow pressure at the water channel opening 210b and ensure the operational stability of the stator mandrel 21. Moreover, a reinforcing rib is arranged between two adjacent first cooling water channels 2101a. to enhance the structural strength of the mandrel wall 210.

According to the stator assembly 20 in accordance with the present invention, by providing a loop-type cooling water channel inside the mandrel wall 210 of the stator mandrel 21, the stator mandrel 21 is integrated with a cooling function. The loop-type cooling water channel is longer, whereby the flow path of the cooling medium is longer, the flow time of the cooling medium is longer, the contact area between the cooling water channel and the winding component 22 is larger, the heat exchange time is longer, and thus the heat dissipation effect is better. A structure arranged with the stator assembly 20 designed according to the present invention has better heat dissipation effect, and reliable operation.

The linear motor 1 according to embodiments of the present invention will be described briefly below.

As shown in FIGs. 1 to 33, the linear motor 1 according to the present invention includes: a rotor assembly 10 and a stator assembly 20. The stator assembly 20 is a stator assembly 20 according to any one of the above embodiments, and the rotor assembly 10 and stator assembly 20 can move relatively. Specifically, the rotor assembly 10 can cooperate with the stator assembly 20, and the rotor assembly 10 can move relative to the stator assembly 20. During the process, heat energy is generated with the movement of the rotor assembly 10, and heat is also generated due to the friction between the rotor assembly 10 and other structures. The cooling channel in the stator assembly 20 can also be configured to exchange heat with the rotor assembly 10, so that the linear motor 1 has no need to be additionally arranged with a cooling structure, to reduce parts required in the linear motor 1, and reduce the manufacturing cost of the linear motor 1.

The linear motor 1 according to embodiments of the present invention is arranged with the above-mentioned stator assembly 20, so the linear motor 1 has fewer parts, better heat dissipation effect, and reliable operation.

In some embodiments, the rotor assembly 10 is arranged with an excitation assembly 11. The excitation assembly 11 generally includes an excitation winding, and the excitation winding is coupled with the winding component 22 to enable the rotor assembly 10 to move relative to the stator assembly 20.

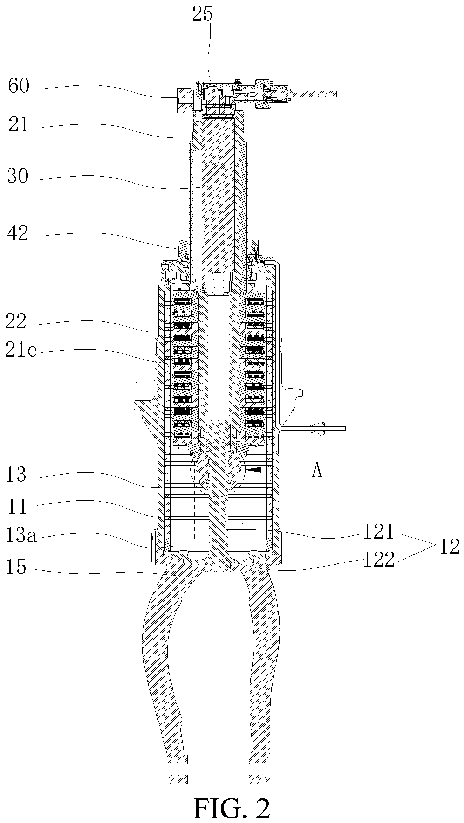

According to some embodiments of the present invention, as shown in FIG. 2, the linear motor 1 further includes an electrically conductive assembly 30. One end of the electrically conductive assembly 30 is connected to the winding component 22, and the other end is configured to connect to a motor controller. The cooling water channel further includes a second cooling water channel 2102a. The second cooling water channel 2102a is configured to exchange heat with the electrically conductive assembly30. In some embodiments, in a direction from the axial first end of the mandrel wall 210 to the axial second end of the mandrel wall 210, the second cooling water channel 2102a and the first cooling water channel 2101a are arranged in sequence, where the second cooling water channel 2102a is located upstream in the cooling water channel, and the first cooling water channel 2101a is located downstream in the cooling water channel. The position where the first cooling water channel 2101a is located corresponds to a first portion of the stator mandrel 21. The first portion of the stator mandrel 21 may be arranged with a first-portion structural member. The first cooling water channel 2101a can exchange heat with the first-portion structural member. In some embodiments, the first-portion structural member includes the winding component 22. The position where the second cooling water channel 2102a is located corresponds to a second portion of the stator mandrel 21. The second portion of the stator mandrel 21 may be arranged with a second-portion structural member. The second cooling water channel 2102a can exchange heat with the second-portion structural member. In some embodiments, the second-portion structural member includes the electrically conductive assembly 30. Multiple types of cooling water channels are provided inside the mandrel wall 210 of the stator mandrel 21, which can exchange heat with multiple structures, to meet the heat exchange requirements of the multiple structures, and ensure the heat exchange effect of an apparatus arranged with the stator assembly 20. Therefore, the device is ensured to operate normally.

The electrically conductive assembly 30 may adapted to be electrically connected to the winding component 22, to power the winding component 22. In this manner, the winding component 22 is coupled with the excitation assembly 11, to enable the linear motor 1 to operate normally.

According to some embodiments of the present invention, the linear motor 1 further includes a detection device configured to detect the displacement of the rotor assembly 10. Specifically, the detection device can be arranged on the stator assembly 20, to detect the movement of the rotor assembly 10 relative to the stator assembly 20. The detection device can also be configured to have two portions. One portion is located on the stator assembly 20, and the other portion is located on the rotor assembly 10. The two portions of the detection device sense each other, to detect the movement of the rotor assembly 10 relative to the stator assembly 20.

Moreover, the detection device can detect the displacement of the rotor assembly 10 by detecting the moving distance of the rotor assembly 10, such as a displacement sensor. The detection device can also detect the displacement of the rotor assembly 10 by detecting the image of the rotor assembly 10 at a certain moment. For example, a camera is arranged on the stator assembly 20, and a grid plate is arranged on the rotor assembly 10. The camera capture the grid corresponding to the grid to calculate a current position of the rotor assembly 10, with which a current displacement of the rotor assembly 10 is calculated. The detection device may also be other devices for detecting the displacement of the rotor assembly 10, and can be selected according to the actual demand, which is not limited here.

According to some embodiments of the present invention, the detection device includes a sensing member 41 and a sensing head 42. The sensing member 41 is arranged on the stator mandrel 21, the sensing head 42 is arranged on the rotor assembly 10, and the sensing head 42 is coupled with the sensing member 41 to detect the position of the rotor assembly 10. Specifically, when the rotor assembly 10 moves relative to the stator assembly 20, the sensing member 41 and the sensing head 42 also move relatively. At this time, the sensing member 41 and the sensing head 42 are coupled, to detect the position of the rotor assembly 10.

In some embodiments, the sensing member 41 is configured as a sensor magnetic stripe, and the sensing head 42 is a sensor head. The sensor magnetic stripe can operate with the sensor head, to detect the moving position of the rotor assembly 10.

In some embodiments, the sensor magnetic stripe has multiple magnetic field sensors distributed in the axial direction of the stator mandrel 21. The sensor head can be a magnetic navigation sensor. The magnetic field sensor at each detection point of the magnetic stripe can convert the magnetic tape strength at its position into an electrical signal, and transmits the electrical signal to a control chip of the magnetic navigation sensor. The control chip can measure the magnetic field intensity of each detection point through data conversion. The rotor assembly 10 is adapted to move in the axial direction relative to the stator assembly 20. During the movement of the rotor assembly 10, the sensor head can get the position of each detection point relative to the position sensor, to detect the moving position of the rotor assembly 10.

In other embodiments, the sensing member 41 may be a scale grating, and the sensing head 42 may be a scale grating. When the grating and the scale grating move relatively, because the relative displacement between them changes the propagation path of light, bright and dark interference fringes are formed on a photoelectric receiver. By calculating the number of the interference fringes, the displacement of the rotor assembly 10 can be obtained.

In related art, the detection device protrudes from an outer peripheral wall of the stator mandrel 21. When other structures fit to the stator mandrel 21, the detection device tends to interfere with other structures, leading to abrasion of other structures, and even causing the linear motor 1 to get stuck. Meanwhile, since the detection device protrudes from the outer peripheral wall of the stator mandrel 21, an outer peripheral surface of the stator mandrel 21 cannot be formed to have a well sealed structure, and external water vapor easily enters the interior of the linear motor 1, causing the failure of the motor 1.

According to some embodiments of the present invention, the sensing member 41 is arranged on the outer peripheral wall of the stator mandrel 21. The stator assembly 20 further includes a covering member 23, and the covering member 23 is arranged on the stator mandrel 21 to cover the sensing member 41. Specifically, the covering member 23 can protect the sensing member 41, and the covering member 23 covers the sensing member 41, to prevent the sensing member 41 from interfering with other structures due to its arrangement on the outer peripheral wall of the stator mandrel 21. The covering member 23 can also seal the sensing member 41.

According to some embodiments of the present invention, the outer peripheral wall of the stator mandrel 21 is provided with an accommodating groove 21a, and the sensing member 41 is located in the accommodating groove 21a, whereby the sensing member 41 is arranged, to avoid the detachment of the sensing member 41 from the stator assembly 20.

In some embodiments, an adhesive layer is arranged between the sensing member 41 and the outer peripheral wall of the stator mandrel 21, to enhance the stability of connection between the sensing member 41 and the stator mandrel 21.

In some other embodiments, the outer peripheral wall of the stator mandrel 21 and an inner peripheral wall of the covering member 23 are respectively provided with a groove recessed in a direction away from each other. The two grooves extends in the axial direction, and the two grooves jointly define the accommodating groove 21a. Alternatively, the outer peripheral wall of the stator mandrel 21 is spaced away from the inner peripheral wall of the covering member 23 to form a gap, and the gap is the accommodating groove 21a.

In other embodiments, the inner peripheral wall of the covering member 23 is provided with an accommodating groove 21a extending in the axial direction, to adapt to mount the sensing member 41.

According to some embodiments of the present invention, a portion of the peripheral wall of the stator mandrel 21 is recessed inward to define the accommodating groove 21a. In some embodiments, the accommodating groove 21a is formed by a portion of the outer peripheral wall of the stator mandrel 21 recessed inward radially, which reduces the radial size of the stator mandrel 21 while the sensing member 41 is arranged.

According to some embodiments of the present invention, an axial end of the accommodating groove 21a is open to define a mounting opening 21b for the sensing member 41, and the stator assembly 20 further includes an occluder 24 for occluding the mounting opening 21b. Here, the covering member 23 may cover the surface of the stator mandrel 21 where the accommodating groove 21a is formed. The covering member 23 is spaced away from the accommodating groove 21a, to cover the sensing member 41 after the sensing member 41 is placed in the accommodating groove 21a. At this time, the covering member 23 is spaced away from the portion of the accommodating groove 21a defining the mounting opening 21b, so that the sensing member 41 can be placed in the accommodating groove 21a through the mounting opening 21b. The occluder 24 occludes the mounting opening 21b after the sensing member 41 is placed in the accommodating groove 21a, to prevent the exposure of the sensing member 41 out of the mounting opening 21b; and seals the accommodating groove 21a, to prevent foreign matters from entering the accommodating groove 21a, and avoid the influence on the normal operation of the sensing member 41.

When the sensing member 41 is mounted, the sensing member 41 can be slidably mounted in the accommodating groove 21a through the mounting opening 21b, making the mounting of the sensing member 41 more convenient.

In some embodiments, when the occluder 24 is mounted to the installation opening 21b, it is at least partially accommodated in the accommodating groove 21a and/or the mounting opening 21b and abuts against the sensing member 41 in the axial direction, to occlude the remaining space in the accommodating groove 21a. In this way, the sensing member 41 can be stably mounted in the accommodating groove 21a, to prevent the sensing member 41 from loosening, and enable the sensing member 41 to accurately reflect, together with the sensing head 42, the displacement of the rotor assembly 10 relative to the stator assembly 20.

According to some embodiments of the present invention, in the circumferential direction of the stator mandrel 21, the accommodating groove 21a is staggered in position from the cooling water channel. It can be understood that the cooling water channel is provided inside the mandrel wall 210 of the stator mandrel 21, and the accommodating groove 21a is provided on outer peripheral surface of the mandrel wall 210 of the stator mandrel 21. To ensure the structural strength of the mandrel wall 210, in the circumferential direction of the stator mandrel 21, the accommodating groove 21a is staggered and spaced away from the cooling water channel.

According to some embodiments of the present invention, the covering member 23 is sleeved on the outer peripheral wall of the stator mandrel 21. In some embodiments, the covering member 23 is configured as a sleeve structure, sleeved on the outer periphery of the stator mandrel 21 and covering the sensing member 41. By designing a sleeve-like covering member 23, the outer surface of the stator mandrel 21 can be formed with a complete circumferential surface, which is convenient for the arrangement of other structures.

According to some embodiments of the present invention, the covering member 23 includes a body portion 231 and a cover plate 232, where the cover plate 232 is fixed to the body portion 231 and arranged radially facing the sensing member 41.

In some embodiments, the body portion 231 and the cover plate 232 are separate members. The body portion 231 is fixed to the stator mandrel 21 and is a member made of a magnetically conductive material. The cover plate 232 is a member made of a non-magnetically conductive material. Specifically, the covering member 23 have separate structures. The body portion 231 connected to the stator mandrel 21 is a member made of a magnetically conductive material, so that the covering member 23 has high structural strength, to reduce the possibility that the covering member 23 is worn or deformed by force, thereby ensuring the operational stability and reliability of the linear motor 1. The cover plate 232 is located between the sensing member 41 and the sensing head 42 and is a member made of a non-magnetically conductive material, to avoid the influence of the cover plate 232 on the cooperation between the sensing member 41 and the sensing head 42, and ensure the detection accuracy of the sensing member 41 and the sensing head 42 for the displacement of the rotor assembly 10.

In some embodiments, the body portion 231 has a sleeve structure. After the body portion 231 fits to the stator mandrel 21, a window can be opened on a portion of the body portion 231 directly facing the sensing member 41. The cover plate 232 is mounted to the window, and directly faces the sensing member 41.

In some embodiments, the body portion 231 and the cover plate 232 may be detachably connected, where the detachable connection includes, but is not limited to, threaded connection or snap-fit connection.

In some other embodiments, the body portion 231 and the cover plate 232 may be non-detachably connected, where the non-detachable connection includes, but is not limited to, welding or bonding.

For example, the body portion 231 and the cover plate 232 may be welded together, to improve the bonding strength between the body portion 231 and the cover plate 232, and prevent the detachment of the body portion 231 and the cover plate 232 during the operation of the linear motor 1. Therefore, the operational stability and reliability of the linear motor 1 is improved. The welding includes, but is not limited to, ultrasonic welding, diffusion welding and laser welding.

In some embodiments, the magnetic permeability of the body portion 231 is greater than that of the cover plate 232. Therefore, the influence of the cover plate 232 on the magnetic field generated by the sensing member 41 can be reduced or even avoided, to ensure the stability of cooperation between the sensing member 41 and the sensing head 42, and improve the detection accuracy of the detection device.

According to some embodiments of the present invention, the winding component 22 is arranged with a first positioning piece 221, and the stator mandrel 21 is arranged with a second positioning piece 212. The first positioning piece 221 and the second positioning piece 212 cooperate to limit the circumferential freedom of the winding component 22. In the circumferential direction of the stator mandrel 21, the second positioning piece 212 is staggered in position from the cooling water channel. It can be understood that the first positioning piece 221 can cooperate with the second positioning piece 212 to limit the rotation of the winding component 22 relative to the stator mandrel 21, thereby ensuring the stability of connection between the winding component 22 and the stator mandrel 21. Moreover, the second positioning member 212 is staggered from the cooling water channel in the circumferential direction, to avoid the application of a circumferential force on the second positioning member 212 by the first positioning piece 221 when a tendency of relative rotation exists between the stator mandrel 21 and the winding component 22, so as to avoid the decline in structural strength of the stator mandrel 21.

By the staggered arrangement of the second positioning piece 212 and the cooling water channel in circumferential direction, the space requirement for arranging the second positioning piece 212 and the cooling water channel can be ensured, to avoid a too small wall thickness of the cooling water channel due to the occupation of the second positioning piece 212 in the wall thickness of the cooling water channel, thus avoiding a degraded structural strength of the stator mandrel 21. It can be understood that if the wall thickness at the cooling water channel is small, the casting difficulty is high. By the staggered arrangement of the second positioning piece 212 and the cooling water channel, rupture of the wall at the cooling water channel can be avoided during casting.

In some embodiments, the second positioning piece 212 is a positioning groove.

In some embodiments, the winding component 22 is sleeved on the stator mandrel 21. The first positioning piece 221 is configured as a positioning projection arranged at an inner side of the winding component 22, and the positioning projection extends axially. The second positioning piece 212 is configured as a positioning groove provided on the outer peripheral surface of the stator mandrel 21, and positioning groove extends axially.

In some embodiments, in the circumferential direction of the stator mandrel 21, multiple cooling water channels spaced apart from each other are arranged. The mandrel wall 210 between two adjacent cooling water channels is configured as a water channel rib 216. The positioning groove is correspondingly provided on the outer peripheral surface of the water channel rib 216, to stagger from the cooling water channel in the circumferential direction.

According to some embodiments of the present invention, the mandrel wall 210 of the stator mandrel 21 encloses a wiring space 21c. The electrically conductive assembly 30 is arranged in the wiring space 21c. A first end of the electrically conductive assembly 30 is connected to a lead wire 2221 of the winding component 22, and a second end of the electrically conductive assembly 30 is adapted for electrical connection with a motor controller. In some embodiments, the wiring space 21c extends axially along the stator mandrel 21, and the electrically conductive assembly 30 is also arranged axially along the stator mandrel 21. An axial first end of the electrically conductive assembly 30 is connected to the winding component 22, and an axial second end of the electrically conductive assembly 30 is connected to a motor controller. Here, the electrically conductive assembly 30 is adapted to electrically connect the motor controller to the winding component 22, to control the on-off of the winding component 22, thereby controlling the relative movement of the stator assembly 20 and the rotor assembly 10.

In some embodiments, the winding component 22 may include a three-phase coil.

The mandrel wall 210 of the stator mandrel 21 is formed to have a cooling water channel, and the mandrel wall 210 of the stator mandrel 21 enclosures a wiring space 21c. The electrically conductive assembly 30 is arranged in the wiring space 21c. Both the cooling water channel and the electrically conductive assembly 30 are arranged at the mandrel wall 210 of the stator mandrel 21, which improves the space utilization rate at the stator mandrel 21, makes the structure of the stator assembly 20 more compact, and facilitates the miniaturized design of the linear motor 1. Because the cooling water channel is provided inside the mandrel wall 210 of the stator mandrel 21, the mandrel wall 210 of the stator mandrel 21 has good sealing performance for the cooling water channel, to improve the isolation between the electrically conductive assembly 30 and the cooling water channel, and improve the safety of the linear motor 1. Additionally, the cooling water channel can exchange heat with the electrically conductive assembly 30 and the winding component 22 at the same time, to improve the heat dissipation efficiency and heat dissipation effect for the linear motor 1.

According to some embodiments of the present invention, the mandrel wall 210 of the stator mandrel 21 is provided with a connecting notch 21d. The linear motor 1 also includes an adapter 50, and the adapter 50 extends through the connecting notch 21d and is respectively connected to the lead wire 2221 and the electrically conductive assembly 30. Specifically, the lead wire 2221 generally extends in the axial direction of the stator mandrel 21, and the electrically conductive assembly 30 also extends along the wiring space 21c in the axial direction of the stator mandrel 21, so the lead wire 2221 and the electrically conductive assembly 30 are theoretically arranged approximately in parallel. By arranging the adapter 50, an end portion of the lead wire 2221 is electrically connected to an end portion of the electrically conductive assembly 30 exposed out of the connecting notch 21d, to facilitate the connection between the lead wire 2221 and the electrically conductive assembly 30, make the processing easier, and provide high process feasibility.

In some embodiments, the adapter 50 may extend in the radial direction of the stator mandrel 21, and two ends of the adapter 50 are respectively connected to the lead wire 2221 and the electrically conductive assembly 30.

In some embodiments, the adapter 50 is an electrically conductive structure.

In some embodiments, the adapter 50 is externally wrapped with an insulating structure, to avoid electric leakage, and avoid the short circuit of the adapter 50 caused by the external contact of the adapter 50 with impurities. A portion of connection of the adapter 50 to the lead wire 2221 and a portion of connection of the adapter 50 to the electrically conductive assembly 30 are exposed out of the insulating structure, to electrically connect the lead wire 2221 and the electrically conductive assembly 30.

In some embodiments, the lead wire 2221 is externally wrapped with an insulating structure, to avoid the electric leakage and short circuit. A portion of the lead wire 2221 connected to the adapter 50 is exposed out of the insulating structure, for electrical connection with the adapter 50.

In some embodiments, the lead wire 2221 is located at an outer side of the stator mandrel 21 in the radial direction, and the lead wire 2221 extends through the connecting notch 21d and is electrically connected to the electrically conductive assembly 30.

Here, the winding component 22 is sleeved on the outer peripheral surface of the stator mandrel 21. The lead wire 2221 of the winding component 22 is also located at the outer side of the stator mandrel 21 in the radial direction. To facilitate the electrical connection between the lead wire 2221 and the electrically conductive assembly 30 in the wiring space 21c inside the stator mandrel 21, a connecting notch 21d in communication with the outer space of the mandrel wall 210 of the stator mandrel 21 and the wiring space 21c is provided on the mandrel wall 210 of the stator mandrel 21. At this time, the lead wire 2221 can extend into the wiring space 21c through connecting notch 21d, for electrical connection with the electrically conductive assembly 30.

In some embodiments, alternatively, partial structure of the electrically conductive assembly 30 extends into the outer space of the mandrel wall 210 of the stator mandrel 21 through the connecting notch 21d, for electrical connection with the lead wire 2221.

In some embodiments, the connecting notch 21d is located at the bottom of the wiring space 21c. Here, the wiring space 21c extends axially along the stator mandrel 21, and the electrically conductive assembly 30 is also arranged axially along the stator mandrel 21. By arranging the connecting notch 21d at the bottom of the wiring space 21c, the electrically conductive assembly 30 and/or the lead wire 2221 has/have no need to be bent to adapt to the position of the connecting notch 21d, so as to simplify the process design of the electrically conductive assembly 30 and the lead wire 2221, and ensure the structural strength of the electrically conductive assembly 30 and the lead wire 2221.

In some embodiments, the winding component 22 is sleeved on the outer periphery of the stator mandrel 21. In this case, the wiring space 21c can extend from one end to the other end of the stator mandrel 21 in the axial direction. The connecting notch 21d is provided at the other end of the stator mandrel 21 in the axial direction, and the lead wire 2221 of the winding component 22 extends to the other end of the stator mandrel 21 in the axial direction, so as to extend through the connecting notch 21d into the wiring space 21c.

In some other embodiments, the winding component 22 is sleeved on the outer periphery of the stator mandrel 21 and arranged adjacent to the other end of the stator mandrel 21 in the axial direction. The winding component 22 is spaced away from the one end of the stator mandrel 21 in the axial direction. At this time, the wiring space 21c can extend from the one end towards the other end of the stator mandrel 21 in the axial direction and to the position where the stator mandrel 21 is sleeved with the winding component 22. The connecting notch 21d is arranged adjacent to the winding component 22, and the lead wire 2221 of the winding component 22 extends towards the one end of the stator mandrel 21 in the axial direction, so as to extend through the connecting notch 21d into the wiring space 21c.

According to some embodiments of the present invention, The adapter 50 is welded to the lead wire 2221 and the electrically conductive assembly 30 respectively, to ensure the connection strength between the adapter 50 and the lead wire 2221 and between the adapter 50 and the electrically conductive assembly 30, and avoid the detachment of the adapter 50 from the lead wire 2221 or the electrically conductive assembly 30 during the use of the linear motor 1, thereby ensuring the operational stability and reliability of the linear motor 1.

In some embodiments, to implement the welding process of the adapter 50 and the lead wire 2221, the welding point of the adapter 50 and the lead wire 2221 should not be too close to the stator mandrel 21, to prevent the inability of the welding torch to operate. The minimum distance from the welding point of the adapter 50 and the lead wire 2221 to the outer surface of the stator mandrel 21 needs to be determined with reference to the specifications of the welding torch, which is not limited herein. The portion of the lead wire 2221 connected to the adapter 50 is electrically conductive. To ensure the overall insulation effect, the distance from the welding point of the lead wire 2221 and the adapter 50 to an outer periphery of the winding component 22 should be not less than 2 mm.

According to some embodiments of the present invention, the adapter 50 is arranged with a first welding head 51 and a second welding head 52. The first welding head 51 and the second welding head 52 respectively extend along the axial direction of the stator mandrel 21. The first welding head 51 is welded to the electrically conductive assembly 30, and the second welding head 52 is welded to the lead wire 2221. Specifically, the first welding head 51 and the second welding head 52 are respectively arranged at both ends of the adapter 50 in the extending direction. For example, a surface of the second welding head 52 facing the lead wire 2221 is a welding surface between the second welding head 52 and the lead wire 2221. The second welding head 52 is designed to be located at one end of the adapter 50 and extend along the axial direction of the stator mandrel 21, to increase the area of the welding surface, improve the stability of welded connection, and facilitate the welding operation. The extension of the first welding head 51 along the axial direction of the stator mandrel 21 also has the effect of improving the stability of welded connection between the first welding head 51 and the electrically conductive assembly 30, and the effect of facilitating the welding operation between the first welding head 51 and the electrically conductive assembly 30.

In some embodiments, the first welding head 51 and the second welding head 52 are formed by axially bending both ends of the adapter 50 towards the stator mandrel 21.

In some embodiments, the portion of the electrically conductive assembly 30 exposed out of the connecting notch 21d is provided with a welding port 31a. The first welding head 51 is adapted to be accommodated in the welding port 31a. The first welding head 51 can be welded to the welding port 31a, to connect the adapter 50 to the electrically conductive assembly 30. Here, to facilitate the welding operation, the area of the electrically conductive assembly 30 exposed out of the connecting notch 21d needs to be larger than that of the welding port 31a.

In some embodiments, the welding port 31a and the first welding head 51 should are at least in transition fit or interference fit, to facilitate the welding operation.

In some embodiments, to ensure the welding quality, a front end face of the first welding head 51 and a front end face of a welding hole are on the same plane.

According to some embodiments of the present invention, the stator assembly 20 further includes a first clip connector 25. A first end of the first clip connector 25 is electrically connected to one end of the electrically conductive assembly 30 away from the winding component 22, and a second end of the first clip connector 25 is adapted for electrical connection with a motor controller. Here, the first end of the electrically conductive assembly 30 is located in the wiring space 21c and exposed out of the connecting notch 21d to be electrically connected to the lead wire 2221. The second end of the electrically conductive assembly 30 is electrically connected to the first clip connector 25. The first clip connector 25 connects the electrically conductive assembly 30 and the motor controller.

In some embodiments, the outer peripheral wall of the stator mandrel 21 is arranged with a limiting protrusion 213. The limiting protrusion 213 is located between the winding component 22 and the first clip connector 25 and adapt to fit to the winding component 22, to limit the axial displacement of the winding component 22. To prevent the winding component 22 from moving in the axial direction of the stator mandrel 21, the limiting protrusion 213 is arranged. The limiting protrusion 213 is located between the winding component 22 and the first clip connector 25, to fit to an axial end of the winding component 22, thereby avoiding the winding component 22 from moving in the axial direction of the stator mandrel 21.

The limiting protrusion 213 and the winding component 22 can be in abutting fit, snap fit or other modes of fit.

In some embodiments, to fix the winding component 22 to the outer surface of the stator mandrel 21, the cross section of the portion of the stator mandrel 21 fitting with the winding component 22 may have a non-circular shape such as rectangle and pentagon, to restrict the winding component 22 from rotating in the circumferential direction relative to the stator mandrel 21. Alternatively, as described in the embodiment hereinbefore, the winding component 22 is arranged with a first positioning piece 221, and the stator mandrel 21 is arranged with a second positioning piece 212. The first positioning piece 221 can cooperate with the second positioning piece 212 to restrict the winding component 22 from rotating in the circumferential direction relative to the stator mandrel 21.

In some embodiments, in the axial direction of the stator mandrel 21, the connecting notch 21d and the limiting protrusion 213 are at the same height. Specifically, the arrangement of the connecting notch 21d on the mandrel wall 210 of the stator mandrel 21 will reduce the strength of the stator mandrel 21. By designing the connecting notch 21d and the limiting protrusion 213 to be located at the same height of the stator mandrel 21, that is, locating the connecting notch 21d and the limiting protrusion 213 on the same circumference, the problem of reduced strength of the stator mandrel 21 caused by the arrangement of the connecting notch 21d can be alleviated.

In some embodiments, since the three-phase coil generally has three lead wires 2221, three connecting notches 21d are correspondingly configured, and the three connecting notches 21d are evenly distributed on the circumference of the stator mandrel 21. The connecting notches 21d are spaced by 120°.

In some embodiments, a fixing protrusion 214 is internally arranged in the wiring space 21c, and the electrically conductive assembly 30 is fixed to the fixing protrusion 214. Specifically, the stator mandrel 21 has a fixing protrusion 214, and the fixing protrusion 214 is located in the wiring space 21c enclosed by the mandrel wall 210 of the stator mandrel 21. Here, the electrically conductive assembly 30 may have a first mounting hole 30a, and the fixing protrusion 214 may have a second mounting hole 21f. A bolt is extended through the first mounting hole 30a and the second mounting hole 21f to fixedly connect the electrically conductive assembly 30 and the stator mandrel 21. The fixing protrusion 214 is arranged in the wiring space 21c, without occupying the external space of the stator mandrel 21. This facilitates the improvement of the space utilization.

In some embodiments, after the electrically conductive assembly 30 fits to the stator mandrel 21, at least a portion of the electrically conductive assembly 30 is located at an outer side of the fixing protrusion 214 in the axial direction of the stator mandrel 21. In the case, the at least portion of the electrically conductive assembly 30 is arranged closer to the end of the stator mandrel 21 than the fixing protrusion 214. The bolt is extended through the first mounting hole 30a and the second mounting hole 21f sequentially from the end of the stator mandrel 21, to fixedly connect the electrically conductive assembly 30 and the stator mandrel 21.

In some embodiments, the fixing protrusion 214 and the stator mandrel 21 are an integral piece. Specifically, the fixing protrusion 214 is connected to an inner wall of the wiring space 21c. Here, one end of the fixing protrusion 214 may be connected to the inner wall of the wiring space 21c, and the other end of the fixing protrusion 214 may extend towards the inside of the wiring space 21c.

Multiple fixing projections 214 may be arranged. For example, two fixing projections 214 may be arranged. By arranging multiple fixing projections 214, the installation firmness of the electrically conductive assembly 30 can be improved.

The fixing protrusion 214 and the stator mandrel 21 are integrally formed, to increase the structural strength, and reduce the probability of detachment of the fixing protrusion 214 from the stator mandrel 21. Moreover, by integrally forming the fixing protrusion 214 and the stator mandrel 21, the integration level of the stator mandrel 21 is improved, the number of parts of the linear motor 1 is reduced, thereby simplifying the assembly steps of parts of the linear motor 1, and improving the production and assembly efficiency of the linear motor 1.

According to some embodiments of the present invention, the electrically conductive assembly 30 includes an electrically conductive member 31 and an electrically insulating member 32 wrapping the electrically conductive member 31. The electrically insulating member 32 is fixed to the fixing protrusion 214 inside the stator mandrel 21, and the electrically conductive member 31 is connected to the lead wire 2221 and a motor controller respectively. Specifically, the electrically conductive member 31 extends in the axial direction of the stator mandrel 21, a first end of the electrically conductive member 31 in the extending direction is electrically connected to the lead wire 2221, and a second end of the electrically conductive member 31 in the extending direction is electrically connected to the motor controller. Here, in some embodiments, the second end of the electrically conductive member 31 is electrically connected to the first clip connector 25, and the first clip connector 25 is then electrically connected to the motor controller.

To prevent the short circuit or failure of the electrically conductive member 31 due to the contact of condensed water or other impurities with the electrically conductive member 31, the electrically insulating member 32 wrapped outside the electrically conductive member 31 is arranged to protect the electrically conductive member 31. After the electrically conductive assembly 30 fits to the stator mandrel 21, a portion of the electrically insulating member 32 adjacent to the end portion of the stator mandrel 21 is located at the outer side of the fixing protrusion 214 in the axial direction of the stator mandrel 21. The first mounting hole 30a extends through the portion of the electrically insulating member 32 in the axial direction. The bolt is extended through the first mounting hole 30a and the second mounting hole 21f sequentially from the end of the stator mandrel 21, to fixedly connect the electrically conductive assembly 30 and the stator mandrel 21.

In some embodiments, the portion of the electrically insulating member 32 adjacent to the end portion of the stator mandrel 21 is also provided with a hole configured to mate with the first clip connector 25. After the electrically conductive assembly 30 is fixedly connected to the stator mandrel 21, a wire end of the clip connector can be connected to the electrically insulating member 32 through the hole, to connect the wire end of the clip connector to the stator mandrel 21.

In some embodiments, the electrically conductive member 31 is exposed at the end portion of the electrically insulating member 32 through the hole, for electrical connection with the electrically conductive member 31 after the wire end of the clip connector is connected to the electrically insulating member 32.

According to some embodiments of the present invention, the electrically insulating member 32 is arranged with a first anti-rotation member, the stator mandrel 21 is arranged with a second anti-rotation member, and the first anti-rotation member mates with the second anti-rotation member to limit the rotation freedom of the electrically conductive assembly 30 in the circumferential direction. In some embodiments, the first anti-rotation member is a protrusion, and the second anti-rotation member is a groove provided on the inner wall of the wiring space 21c.

In some embodiments, the first anti-rotation member is configured as a protrusion structure protruding from an outer peripheral surface of the electrically insulating member 32 and adapted to abut against the inner surface of the stator mandrel 21 defining the wiring space 21c. At this time, the second anti-rotation portion can be a groove for accommodating the protrusion.

In some embodiments, the cross section of the electrically insulating member 32 in the axial direction may be a polygon, and the cross section of the wiring space 21c in the axial direction is also configured as a corresponding polygon, so that the electrically insulating member 32 will not rotate after being mating with the inner wall of the wiring space 21c, thereby limiting the rotation freedom of the electrically conductive assembly 30 in the circumferential direction.

It can be understood that to facilitate the assembly of the electrically insulating member 32 to the wiring space 21c, the electrically insulating member 32 is in clearance fit with the inner surface of the stator mandrel 21 defining the wiring space 21c. Therefore, to restrict the shaking of the electrically insulating member 32 in the wiring space 21c, an abutting rib 321 is arranged on a circumferential surface of the electrically insulating member 32. The abutting rib 321 abuts against the inner surface of the stator mandrel 21 defining the wiring space 21c, to increase the point supporting the electrically insulating member 32, avoid the shaking of the electrically insulating member 32 in the wiring space 21c, and improve the stability of connection between the electrically insulating member 32 and the stator mandrel 21. Moreover, the abutting rib 321 can also enhance the structural strength of the electrically insulating member 32. Moreover, the number of the abutting rib 321 cannot be too large, to ensure the lightweighting as a whole.

According to some embodiments of the present invention, the wiring space 21c includes a central hole 21g and multiple holding grooves 21h, and the multiple holding grooves 21h are spaced apart in the circumferential direction and are respectively in communication with the central hole 21g. The electrically insulating member 32 includes a body portion 322 and a leg portion 323. The body portion 322 is arranged in the central hole 21g, and the leg portion 323 extends into the holding groove 21h. The electrically conductive member 31 includes an electrically conductive body 311 and an electrically conductive pin 312. The electrically conductive body 311 is wrapped in the body portion 322. The electrically conductive pin 312 is connected to the electrically conductive body 311, and the electrically conductive pin 312 is wrapped in the leg portion 323, partially exposed out of the leg portion 323, and electrically connected to the lead wire 2221.

The electrically conductive body 311 of the electrically conductive member 31 can be exposed out of the body portion 322 of the electrically insulating member 32, to electrically connect the electrically conductive member 31 to an external power source. Moreover, the electrically conductive body 311 is connected to the external power source only through an electrical connection point on the conductive body 311. Other portions of the electrically conductive body 311 than the electrical connection point are still wrapped by the body portion 322 of the electrically insulating member 32. The electrically conductive pin 312 of the electrically conductive member 31 is exposed out of the leg portion 323 of the electrically insulating member 32, to connect the electrically conductive member 31 to the lead wire 2221. Moreover, the electrically conductive pin 312 is connected to the lead wire 2221 only through an electrical connection point on the electrically conductive pin 312. Other portions of the electrically conductive pin 312 than the electrical connection point are still wrapped by the pin portion 1423 of the electrically insulating member 32. The remaining portions of the electrically conductive member 31 are wrapped by the electrically insulating member 32 except for the necessary electrical connection points that are exposed out of the electrically insulating member 32, whereby the insulating protection effect for the electrically conductive member 31 is greatly improved.

In some embodiments, the electrically conductive assembly 30 is arranged axially along the stator mandrel 21. The electrically conductive member 31 and the electrically insulating member 32 extend axially along the stator mandrel 21. One end of the electrically insulating member 32 in the axial direction is the body portion 322, and the other end in the axial direction is the pin portion 1423. One end of the electrically conductive member 31 in the axial direction is the electrically conductive body 311, and the other end in the axial direction is the electrically conductive pin 312. One end of the electrically conductive member 31 in the axial direction extends to the lead wire 2221 for electrical connection with the lead wire 2221. The other end of the electrically conductive member 31 in the axial direction is electrically connected to an external power source.

In some embodiments, the electrically conductive body 311 of the electrically conductive member 31 is inserted into the body portion 322 of the electrically insulating member 32. The extending direction of the electrically conductive body 311 is not limited. When there are multiple electrically conductive members 31, the electrically conductive bodies 311 of various electrically conductive members 31 are not in contact with each other, and do not interfere with each other.

In some embodiments, the leg portion 323 of the electrically insulating member 32 is configured as the first anti-rotation member, and the holding groove 21h in the wiring space 21c is configured as the second anti-rotation member.

In some embodiments, the electrically insulating member 32 is arranged in the central hole 21g, a portion of the electrically conductive member 31 is arranged in each holding groove 21h, and the electrically conductive member 31 arranged in the holding groove 21h is electrically connected to the lead wire 2221 and the first clip connector 25 respectively.

Specifically, the wire space 21c is configured as a special-shaped structure, to make full use of the space at the stator mandrel 21. At least a portion of each electrically conductive member 31 may extend into a corresponding holding groove 21h, so that the electrically conductive assembly 30 can be in position limiting fit with the stator mandrel 21 in the circumferential direction, to avoid relative rotation between the electrically conductive assembly 30 and the stator mandrel 21.

The holding groove 21h is located at the outer side of the central hole 21g in the radial direction of the stator mandrel 21. In the circumferential direction of the stator mandrel 21, multiple holding grooves 21h are spaced apart around the central hole 21g, and the multiple holding grooves 21h are in communication with the central hole 21g in the radial direction of the stator mandrel 21, which reduces the radial size of the stator mandrel 21, and realizes the lightweight design of the linear motor 1.

According to some embodiments of the present invention, the linear motor 1 also includes a water channel joint 60, and the water channel joint 60 is arranged at the end portion of the stator mandrel 21. The water channel joint 60 is arranged with an inflow end 61 and an outflow end 62, and the inflow end 61 and the outflow end 62 are respectively in communication with the cooling water channel. Specifically, as mentioned above, the water channel opening 210b generally includes an inlet and an outlet, the inflow end 61 of the water channel joint 60 is in communication with the inlet of the cooling water channel, and the outflow end 62 of the water channel joint 60 is in communication with the outlet of the cooling water channel. In some embodiments, the water channel joint 60 of the linear motor 1 joins the cooling water channel of the linear motor 1 to the cooling loop of the vehicle, to form a closed cooling loop.

The water channel joint 60 can be fixedly connected to the end portion of the stator mandrel 21 by a fastener, or fixedly connected by other structures.

In some embodiments, the water channel joint 60 is connected to the end portion of the stator mandrel 21 by bolt connection. In actual design, a seat 63 of the water channel joint 60 is configured as a flat plane, which is connected to the stator mandrel 21 by surface contact. It ensures that the water channel joint 60 is closely attached to the stator mandrel 21, and the water channel joint 60 is tightly locked to the stator mandrel 21 by a connecting bolt. The sealing performance is better, the installation is convenient, and the assembly cost is low.

According to some embodiments of the present invention, the water channel joint 60 is provided with an avoidance space 60a for avoiding the first clip connector 25. In some embodiments, the wire end of the clip connector is arranged at the axial first end of the stator mandrel 21 and connected to the electrically insulating member 32 in the wiring space 21c of the stator mandrel 21. The water channel joint 60 is also arranged at the axial first end of the stator mandrel 21 and in communication with the water channel opening 210b located at the end portion of the stator mandrel 21. Compared with the water channel joint 60, the wire end of the clip connector is locate at the inner side of the stator mandrel 21 in the axial direction, to avoid interference when the water channel joint 60 is assembled with the first clip connector 25. By providing the avoidance space 60a in the water channel joint 60, the installation of the water channel joint 60 and the clip connector is facilitated.

In some embodiments, the seat 63 of the water channel joint 60, that is, the bottom wall of the avoidance space 60a, is configured to support the first clip connector 25. The linear motor 1 also includes a connecting bolt, and the connecting bolt is extended sequentially through the first clip connector 25 and the water channel joint 60 and then connected to the stator mandrel 21. In some embodiments, the first clip connector 25 and the water channel joint 60 are fixed to the stator mandrel 21 and/or the electrically insulating member 32 by means of the connecting bolt.

According to some embodiments of the present invention, as shown in FIG. 2, the stator mandrel 21 is internally provided with a guiding hole21e, and the rotor assembly 10 includes a guiding post 12 in slidable fit with the guiding hole21e. It can be understood that the guiding post 12 is in slidable fit with the guiding hole21e in the axial direction, to limit the rotor assembly 10 and the stator assembly 20 to move relatively only in the axial direction, thereby improving the fitting stability of the rotor assembly 10 and the stator assembly 20, and ensuring the operational stability of the linear motor 1.

In some embodiments, the wiring space 21c is provided at the axial first end of the mandrel wall 210 and extends axially. The wiring space 21c facilitates the arrangement of other structures. The guiding hole 21e is provided at the axial second end of the mandrel wall 210 and extends axially. The guiding hole 21e adapted to be in slidable fit with the guiding post 12.

According to some embodiments of the present invention, as shown in FIG. 2, the guiding hole 21e and the wiring space 21c are in communication, to avoid the fluctuation in gas pressure in the guiding hole 21e when the guiding post 12 moves.

According to some embodiments of the present invention, as shown in FIG. 2, one of the rotor assembly 10 and the stator assembly 20 is arranged with a shell 13 and the other is movably arranged in the shell 13 to define a first chamber 13a with a varying volume. The first chamber13a is located at a side of the winding component 22 facing away from the wiring space 21c, and the first chamber13a is provided with a gas channel in communication with the guiding hole 21e. Specifically, when the rotor assembly 10 and the stator assembly 20 move relatively, the guiding post 12 moves inside the guiding hole 21e, to repeatedly compress the gas in the guiding hole 21e. To avoid the fluctuation in gas pressure in the guiding hole 21e when the guiding post 12 moves, the guiding hole 21e is in communication with the first chamber 13a through a gas channel, to reduce the influence caused by the fluctuation in gas pressure due to the movement of the guiding post 12, and improve the operational stability of the linear motor 1.

In some embodiments, the shell 13 is configured as a portion of the rotor assembly 10, the stator assembly 20 is arranged in the shell 13, and the shell 13 is adapted to move axially relative to the stator mandrel 21 when the winding component 22 is coupled with the excitation assembly 11.

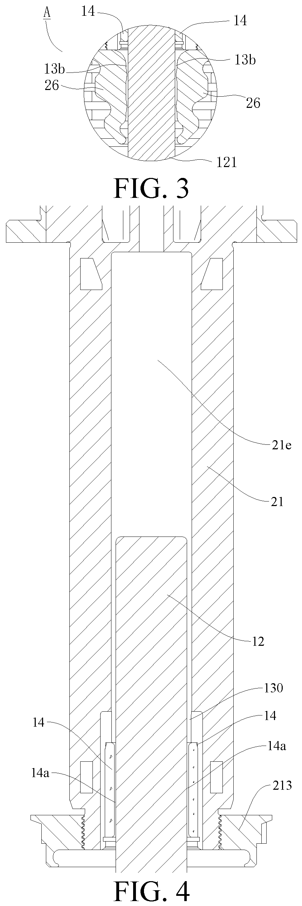

According to some embodiments of the present invention, as shown in FIGs. 2 and 3, a sliding bearing 14 is arranged between the guiding post 12 and the guiding hole 21e. The gas channel includes a first ventilation channel 14a, and the first ventilation channel 14a is provided in the sliding bearing 14. Specifically, by arranging part of the structure of the stator assembly 20 along the axial direction of the shell 13, the first chamber13a can be defined between one axial end of the stator assembly 20 and the shell 13, By arranging the sliding bearing 14 between the stator assembly 20 and the rotor assembly 10, and providing the first ventilation channel 14a on the sliding bearing 14 to increase a communication gap with the first chamber 13a, the gas can flow through the gap between the stator assembly 20 and the rotor assembly 10. Moreover, the flow between the first chamber 13a and the guiding hole 21e can be realized through the first ventilation channel 14a, to increase the flow-through area between the first chamber 13a and the guiding hole 21e. This promotes the adjustment of the pressure difference between the first chamber 13a and the guiding hole 21e, so that the stator assembly 20 and the rotor assembly 10 move smoothly relative to each other, thus prolonging the service life of the linear motor 1. Moreover, the machining of the first ventilation channel 14a on the sliding bearing 14 becomes more convenient, and the processing is simple, thus reducing the production cost.

According to some embodiments of the present invention, as shown in FIG. 2, the rotor assembly 10 includes a shell 13, and the stator assembly 20 further includes a buffering member 26. The buffering member 26 is arranged at an end portion of the winding component 22. The gas channel further includes a second ventilation channel 13b in communication with the first ventilation channel 14a, and the second ventilation channel 13b is defined between the buffering member 26 and an outer peripheral wall of the guiding post 12. Specifically, the buffering member 26 may be arranged at the end portion of the winding component 22 facing an inner wall of the first chamber13a. In some embodiments, the buffering member 26 may also be arranged at the end portion of the winding component 22, and sleeved on the outer peripheral wall of the guiding post 12 and in clearance fit with the guiding post 12. At this time, the gap between the buffering member 26 and the outer peripheral surface of the guiding post 12 is the second ventilation channel 13b. The second ventilation channel 13b can cooperate with the first ventilation channel 14a to realize the flow between the first chamber13a and the guiding hole 21e, further increasing the flow-through area between the first chamber13a and the guiding hole 21e, and promoting the adjustment of the pressure difference between the first chamber 13a and the guiding hole 21e.

When the winding component 22 is coupled with the excitation assembly 11, the rotor assembly 10 and the stator assembly 20 move relatively, At this time, the buffering member 26 is brought into contact with the inner wall of the first chamber 13a, and reduces the trend of relative movement between the rotor assembly 10 and the stator assembly 20, to avoid a large collision between the stator mandrel 21 and the shell 13, and providing a buffering effect.

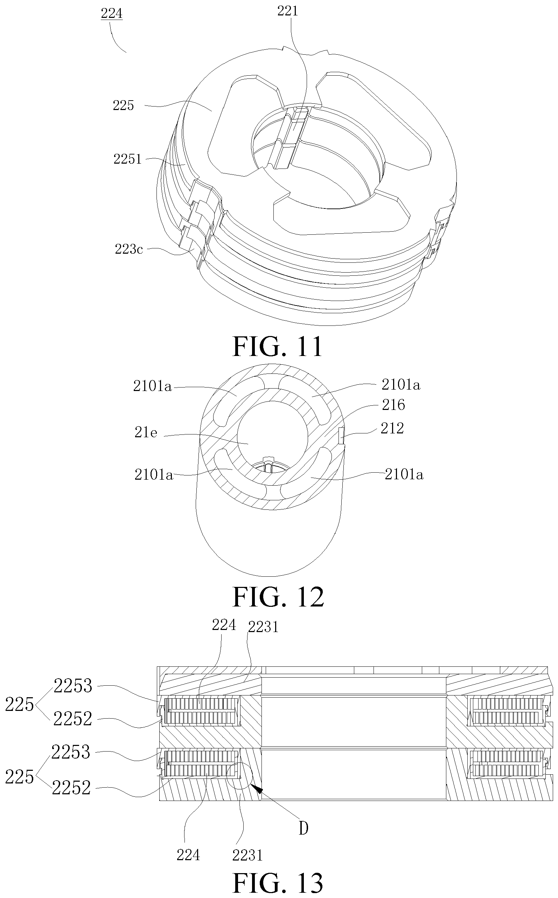

According to some embodiments of the present invention, as shown in FIG. 11, the winding component 22 includes a stator core 223, a coil disc 224 and an electrically insulating framework 225. The stator core 223 is provided with multiple placing grooves 223a arranged along the axial direction. At least one coil disc 224 is arranged in each placing groove 223a, and the electrically insulating framework 225 is arranged between the stator core 223 and the coil disc 224. Specifically, the electrically insulating framework 225 is wrapped around an outer surface of the coil disc 224, to insulate adjacent coil discs 224. Moreover, the electrically insulating framework 225 is arranged to increase the creepage distance, and ensure the overall electrical insulation performance.

According to some embodiments of the present invention, as shown in FIG. 11, the electrically insulating framework 225 is arranged with a guiding block 2251 extending to an outer peripheral wall of the stator core 223, and the guiding block 2251 is configured to insulate the lead wire 2221 of the coil disc 224 and the stator core 223. Specifically, by arranging the guiding block 2251 on the electrically insulating framework 225, the creepage distance can be further increased, to well ensure the overall electrical insulation performance.

According to some embodiments of the present invention, as shown in FIG. 11, multiple fixedly fitted electrically insulating frameworks 225 are arranged in each placing groove 223a, and the multiple electrically insulating frameworks 225 in the same placing groove 223a define a placing space for the coil disc 224. In some embodiments, the electrically insulating frameworks 225 in the same placing groove 223a include upper electrically insulating frameworks 2253 and lower electrically insulating frameworks 2252 arranged in sequence in the axial direction. The electrically insulating frameworks 2253 and the lower electrically insulating frameworks 2252 jointly define the placing space, for placing the coil disc 224. The placing space is jointly defined by the upper electrically insulating frameworks 2253 and the lower electrically insulating framework 2252, to facilitate the arrangement of the coil disc 224.

According to some embodiments of the present invention, the multiple electrically insulating frameworks 225 in the same placing groove 223a are snap fitted. In some embodiments, the electrically insulating frameworks 225 in the same placing groove 223a include upper electrically insulating frameworks 2253 and lower electrically insulating frameworks 2252 arranged in sequence in the axial direction. The upper electrically insulating framework 2253 and the lower electrically insulating framework 2252 are snap fitted, to facilitate the assembly of the upper electrically insulating framework 2253 and the lower electrically insulating framework 2252, and improve the assembly efficiency of the linear motor 1.

According to some embodiments of the present invention, an avoidance groove 223b is provided at any corner of the placing groove 223a. It can be understood that because the coil disc 224 is arranged in the placing groove 223a, to improve the space filling factor, the avoidance groove 223b is designed at the corner of the placing groove 223a, which is recessed towards a side away from the placing groove 223a and in communication with the placing groove 223a, to avoid the corner of the coil disc 224, and improve the space filling factor.

According to some embodiments of the present invention, as shown in FIG. 11, the outer peripheral wall of the stator core 223 is provided with a bridge-type wire slot 223c for passing a lead wire of the coil disc 224. Opposite side walls of the bridge-type wire slot 223c is in arc transition with the remaining portion of the outer peripheral wall of the stator core 223. The chamfered design of this portion facilitates the assembly of the winding and the stator core 223, and avoid the excessive abrasion of the outer surface of the lead wire by the portion of the stator core 223 formed with the bridge-type wire slot 223c, thereby extending the service life of the lead wire, and reducing the maintenance cost of the linear motor 1.

According to some embodiments of the present invention, as shown in FIG. 11, in the circumferential direction of the stator mandrel 21, the maximum size of the portion of the stator core 223 between two adjacent bridge-type wire slots 223c is smaller than the minimum size between two adjacent lead wires. Specifically, the lead wire is generally arranged in a middle portion of the bridge-type wire slot 223c in the circumferential direction of the stator mandrel 21. At this time, in the circumferential direction of the stator mandrel 21, the maximum size of the portion of the stator core 223 between two adjacent bridge-type wire slots 223c is smaller than the minimum size of two adjacent lead wires in the circumferential direction of the stator mandrel 21.

Several embodiments of the present invention are described below in connection with an example where the coil disc 224 includes a three-phase coil.

The stator assembly 20 according to an embodiment in the first aspect of the present invention includes a stator core 223 and a coil disc 224. The stator core 223 includes multiple sub-cores 2231 sequentially arranged in the axial direction, and a placing groove 223a is formed between two adjacent sub-cores 2231. The coil disc 224 is mounted to the stator core 223. Each phase of coil also includes a lead wire 2221. The coil is accommodated in the placing groove 223a. Each placing groove 223a can accommodate one layer of coils or multiple layers of coils arranged along the axial direction of the stator core 223. The lead wire 2221 may be located at an outer peripheral side of the stator core 223. Coils of the same phase located in different placing groove 223a are connected by corresponding lead wires 2221, and the lead wires 2221 of at least three phases of coils are arranged at intervals along the circumferential direction of the stator core 223. The lead wire 2221 includes a first-phase lead wire, a second-phase lead wire and a third-phase lead wire.

For example, the stator assembly 20 is used in a three-phase linear motor. The coil disc 224 of the stator assembly 20 includes three phases of coils, which are a first-phase coil, a second-phase coil and a third-phase coil, respectively. Accordingly, the first-phase coil may be a U-phase coil, the second-phase coil may be a V-phase coil, and the third-phase coil may be a W-phase coil. The first-phase coil includes a first-phase lead wire, the second-phase coil includes a second-phase lead wire, and the third-phase coil include a third-phase lead wire.

The first-phase lead wire, the second-phase lead wire, and the third-phase lead wire are arranged at intervals along the circumferential direction of the stator core 223. Two of the first-phase lead wire, the second-phase lead wire and the third-phase lead wire are spaced by 120°. Coils of the first-phase coil located in different placing grooves 223a are connected by the first-phase lead wire. Coils of the second-phase coil located in different placing grooves 223a are connected by the second-phase lead wire. Coils of the third-phase coil located in different placing grooves 223a are connected by the third-phase lead wire.

The outer peripheral wall of the sub-core 2231 is provided with a bridge-type wire slot 223c for passing the lead wire 2221. The bridge-type wire slot 223c facilitates the lead wire 2221 to pass through, and the bridge-type wire slot 223c can also protect the lead wire 2221, to reduce the possibility of scratching of the lead wire 2221 protruding outward in the radial direction by parts outside the stator assembly 20. Moreover, the overall structure of the lead wire 2221 and the bridge-type wire slot 223c can be made more compact, thereby making the overall structure of the stator assembly 20 more compact.

In the circumferential direction of the sub-core 2231, a portion of the sub-core 2231 located between two adjacent bridge-type wire slots 223c is a core protrusion portion 111. The core protrusion portion 111 located between the first-phase lead wire and the second-phase lead wire is a first core protrusion portion 112, the core protrusion portion 111 located between the second-phase lead wire and the third-phase lead wire is a second core protrusion portion 113, and the core protrusion portion 111 located between the third-phase lead wire and the first-phase lead wire is a third core protrusion portion 114.

The midpoint of the protrusion portion in the circumferential direction of the sub-core 2231 is a first bumping midpoint C. The connecting line between the center B of the sub-core 2231 and the first bumping midpoint C is a first radial reference line d, and a plane perpendicular to the first radial reference line d is a first reference plane. The projection of the protrusion portion on the first reference plane is a first projection, the projection of the first-phase lead wire on the first reference plane is a second projection, and the projection of the second-phase lead wire on the first reference plane is a third projection. The maximum length w1 of the first projection in a reference direction e is smaller than the minimum distance w2 between the second projection and the third projection, where the reference direction e is perpendicular to the first radial reference line d and perpendicular to the axial direction of the stator core 223. This facilitates the first-phase lead wire and the second-phase lead wire to pass through two adjacent bridge-type wire slots 223c, makes the assembly of the stator core 223 and the coil disc 224 more convenient, and reduces the possibility of scratching the first-phase lead wire or the second-phase lead wire by the stator core 223 when the first-phase lead wire and the second-phase lead wire pass through two adjacent bridge-type wire slots 223c during the assembly of the stator core 223 and the coil disc 224.

For example, the stator assembly 20 is used in a three-phase linear motor. The assembly process of the coil disc 224 and the stator core 223 of the stator assembly 20 is described as follows.

Firstly, the first-phase coil, the second-phase coil, and the third-phase coil are fabricated respectively.

The coils of the first-phase coil are radially inserted into the placing grooves 223a of the stator core 223, where the first-phase lead wire passes through the bridge-type wire slot 223c, and assembled with a corresponding sub-core 2231 to form a first-phase sub-assembly. By passing the first-phase lead wire through the bridge-type wire slot 223c, scratching of the first-phase lead wire by the sub-core 2231 in the first-phase sub-assembly can be reduced. The coils of the second-phase coil are radially inserted into the placing grooves 223a of the stator core 223, where the second-phase lead wire passes through the bridge-type wire slot 223c, and assembled with a corresponding sub-core 2231 to form a second-phase sub-assembly. By passing the second-phase lead wire through the bridge-type wire slot 223c, scratching of the second-phase lead wire by the sub-core 2231 in the second-phase sub-assembly can be reduced. The coils of the third-phase coil are radially inserted into the placing grooves 223a of the stator core 223, where the third-phase lead wire passes through the bridge-type wire slot 223c, and assembled with a corresponding sub-core 2231 to form a third-phase sub-assembly. By passing the third-phase lead wire through the bridge-type wire slot 223c, scratching of the third-phase lead wire by the sub-core 2231 in the third-phase sub-assembly can be reduced.

Further, the first-phase sub-assembly and the second-phase sub-assembly are radially inserted into the stator core 223, to complete the assembly of the first-phase sub-assembly and the second-phase sub-assembly. At this time, the first-phase lead wire and the second-phase lead wire are spaced along the circumferential direction of the stator core 223.

Finally, the third-phase sub-assembly is radially inserted into the stator core 223 between the assembled first-phase sub-assembly and second-phase sub-assembly. The protrusion portion of the sub-core 2231 of the third-phase sub-assembly needs to pass through a space between the first-phase lead wire and the second-phase lead wire. By setting the maximum length w1 in the reference direction of the first projection of the protrusion portion on the first reference plane to be smaller than the minimum distance w2 between the second projection of the first-phase lead wire on the first reference plane and the third projection of the second-phase lead wire on the first reference plane, the assembly of the third-phase sub-assembly between the first-phase sub-assembly and the second-phase sub-assembly becomes more efficient, and the scratching of the first-phase lead wire and the second-phase lead wire by the sub-core 2231 of the third-phase sub-assembly can be reduced when the third-phase sub-assembly is inserted between the first-phase sub-assembly and the second-phase sub-assembly.

According to the stator assembly 20 in accordance with the embodiment of the present invention, the bridge-type wire slot 223c for avoiding the lead wire 2221 is provided on the outer peripheral wall of the stator core 223. In the circumferential direction of the stator core 223, the projection of the protrusion portion on the first reference plane is the first projection, the projection of the first-phase lead wire on the first reference plane is the second projection, and the projection of the second-phase lead wire on the first reference plane is the third projection. The maximum length of the first projection in the reference direction is smaller than the minimum distance between the second projection and the third projection. These make the assembly of the coil disc 224 and the stator core 223 more convenient, and can reduce the possibility that the stator core 223 will damage the lead wire 2221 during the assembly of the stator core 223 and the coil disc 224. Moreover, the overall structure of the stator assembly 20 is made to become more compact.

According to some embodiments of the present invention, the projection of the bridge-type wire slot 223c on a second reference plane is a fourth projection, where the second reference plane is perpendicular to the axial direction of the stator core 223. The fourth projection includes two slot side edges oppositely arranged along the circumferential direction of the sub-core 2231. In a direction radially outward from the sub-core 2231, the distance between the two slot side edges of the fourth projection gradually increases, The opening of the bridge-type wire slot 223c can be flared, to facilitate the lead wire 2221 connecting the same phase of coils to pass through the bridge-type wire slot 223c, and reduce the possibility of scratching of the lead wire 2221 by the stator core 223 when passing through the bridge-type wire slot 223c.

According to some embodiments of the present invention, the slot side edge is at least partially arc-shaped. During the assembly process of the stator core 223 and the coil disc 224, the scratching of the lead wire 2221 by the stator core 223 when passing through the bridge-type wire slot 223c can be reduced.

The at least partially arc-shaped slot side edge may include the following instances. For example, the slot side edge is completely arc-shaped. For example, the slot side edge is partially arc-shaped.

According to some embodiments of the present invention, the fourth projection include a slot bottom edge. The slot bottom edge is connected between the slot side edges, and the slot bottom edge extends linearly. For example, the slot bottom edge extends linearly along the circumferential direction of the sub-core 2231. The lead wire 2221 is flat, to facilitate the lead wire 2221 to pass through the bridge-type wire slot 223c, and reduce the scratching of the lead wire 2221 by the stator core 223.

According to some embodiments of the present invention, a transition section is connected between the slot bottom edge and the slot side edge. The transition section is arc-shaped, to form a smooth transition between the slot side edge and the slot bottom edge of the bridge-type wire slot 223c, and reduce the scratching the lead wire 2221 by the stator core 223 when passing through the bridge-type wire slot 223c when the stator core 223 and the coil disc 224 are assembled.

According to some embodiments of the present invention, the projection of the lead wire 2221 on the second reference plane is located in the projection of the corresponding bridge-type wire slot 223c on the second reference plane, where the second reference plane is perpendicular to the axial direction of the stator mandrel 21. The lead wire 2221 is located in the bridge-type wire slot 223c, such that the whole structure of the lead wire 2221 and the stator core 223 is compact, and the lead wire 2221 can be prevented from protruding outward along the radial direction of the stator core 223 and being scratched by external components.

According to some embodiments of the present invention, the stator core 223 is provided with at least one slit, to reduce the eddy current loss of the stator core 223. In some embodiments, the slit runs through the stator core 223 in the axial direction and extends in the radial direction of the stator core 223.

According to some embodiments of the present invention, as shown in FIG. 2, a guiding hole 21e is provided in the stator mandrel 21; and the rotor assembly 10 includes a shell 13 and a cover body 15. The shell 13 has a cylindrical structure, and the shell 13 is housed outside the stator assembly 20. The cover body 15 is detachably connected to a lower end of the shell 13. The rotor assembly 10 further includes a guiding post 12, and the guiding post 12 is installed in an internal cavity of the shell 13. The guiding post 12 includes a guiding portion 121 and a fixing portion 122 connected to each other. The fixing portion 122 is connected to the cover body 15, and the guiding portion 121 and the guiding hole21e are in slidable fit. Specifically, the rotor assembly 10 is arranged with the shell 13. In practical use, the shell 13 can be configured as a cylindrical shell 13 or a rectangular shell 13 according to the requirements during use. In this embodiment, the shell 13 is configured as a cylindrical structure, and the shell 13 can support the overall structure of the linear motor 1. Therefore, the shell 13 can protect the internal components of the linear motor 1, to protect the internal components of the linear motor 1 against external influence, avoid the potential pollution harm to the environment caused by the internal components of the linear motor 1, and improve the environmental protection when the linear motor 1 is used.

Further, the rotor assembly 10 is arranged with the cover body 15, the cover body 15 is arranged at the end portion of the shell 13, and the cover body 15 is detachably connected to the shell 13, which is convenient for the assembly and future maintenance, etc. After the cover body 15 is connected to the shell 13, the cover body 15 and the shell 13 can move together. After being connected to the shell 13, the cover body 15 defines an internal cavity together with the shell 13. Meanwhile, the rotor assembly 10 is also arranged with the guiding post 12, and the guiding post 12 can be arranged in the inner cavity. The guiding post 12 can be arranged with the guiding portion 121 and the fixing portion 122, and the guiding portion 121 and the fixing portion 122 are connected to each other. The fixing portion 122 is connected to the cover body 15, and the guiding portion 121 is connected to a side of the fixing portion 122 facing away from cover body 15, that is, the guiding portion 121 can extend towards the internal cavity. When the rotor assembly 10 and the stator assembly 20 move relatively, the guiding portion 121 and the guiding hole21e slide relative to each other in the axial direction, to limit the relative movement of the rotor assembly 10 and the stator assembly 20 only in the axial direction.

In some embodiments, one of the fixing portion 122 and the cover body 15 is arranged with an annular sealing member protruding in the axial direction. The annular sealing member directly or indirectly abuts against the inner peripheral wall of the shell 13. Specifically, one of the fixing portion 122 and the cover body 15 is arranged with an annular sealing member protruding in the axial direction. That is, the fixing portion 122 is arranged with an annular sealing member protruding in the axial direction, or the cover body 15 is arranged with an annular sealing member protruding in the axial direction. For example, in this embodiment, the annular sealing member is specifically arranged at the fixing portion 122. Therefore, after the fixing portion 122 and the cover body 15 are fixedly connected into one piece, the annular sealing member directly or indirectly abuts against the inner peripheral wall of the shell 13, so that the annular sealing member and the inner peripheral wall of the shell 13 can be in direct or indirect position limiting fit in the radial direction. That is, the annular sealing member can be in direct contact with the inner peripheral wall of the shell 13 and thus in position limiting fit in the radial direction, or the annular sealing member can be in indirect contact with the inner peripheral wall of the shell 13 and thus in position limiting fit in the radial direction. The shell 13 is configured as a cylindrical structure. Therefore, the coaxiality between the guiding post 12 and the shell 13 is ensured, to improve the accuracy in operation of the linear motor 1. Meanwhile, a sealing structure can also be arranged at the site of connection of the cover body 15 and the shell 13 and at the site of radial position limiting fit of the guiding post 12 and the shell 13, to greatly improve the sealing performance of the rotor assembly 10.

A suspension system 1000 of the present invention will be described briefly below.

As shown in FIG. 34, the suspension system 1000 according to the present invention includes the linear motor 1 according to any one of the above embodiments. Since the suspension system 1000 according to the present invention is arranged with the linear motor 1 described in the above embodiment, the suspension system 1000 has higher integration level, fewer parts, lower manufacturing cost, and better heat dissipation effect.

A vehicle 10000 of the present invention will be described briefly below.

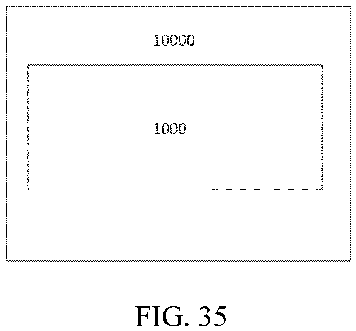

As shown in FIG. 35, the vehicle 10000 according to the present invention includes the suspension system 1000 according to the above embodiment. Since the vehicle 10000 according to the present invention is arranged with the suspension system 1000 described in the above embodiment, the vehicle 10000 can provide higher driving comfort and better user experience.

In summary, according to the stator assembly 20 in accordance with the present invention, the stator mandrel 21 is integrated with a cooling function, so the stator assembly 20 has fewer parts, lower manufacturing cost, and better heat dissipation effect.

As discussed, embodiments can provide a stator assembly, comprising: a stator mandrel, the stator mandrel comprising a mandrel wall, the mandrel wall being internally provided with a cooling water channel extending along an axial direction of the mandrel wall, the mandrel wall being provided with a water channel opening thereon, and the water channel opening being in communication with a first end of the cooling water channel; and a winding component, the winding component being sleeved on an outer periphery of the stator mandrel, wherein the cooling water channel comprises a first cooling water channel, wherein the first cooling water channel is arranged to exchanges heat with the winding component, and wherein at least of a part of the first cooling water channel has a cross-sectional area that is greater than the area of the water channel opening.

Embodiments can provide a linear motor comprising: a stator assembly according to any of the above discussed embodiments; and a rotor assembly, the rotor assembly and the stator assembly being movable relatively.

Embodiments can provide a suspension system comprising a linear motor according to any of the above discussed embodiments.

Embodiments can provide a vehicle, comprising a suspension system according to any of the above discussed embodiments.

In the description of the specification, the description with reference to the terms "an embodiment", "some embodiments", "example", "specific example", or "some examples" and so on means that a specific feature, structure, materials or characteristics described in connection with the embodiment or example are embraced in at least one embodiment or example of the present invention. In the specification, the schematic expressions of the above terms do not necessarily refer to the same embodiment or example. In addition, the described specific features, structure, materials, or characteristics may be combined in a proper manner in any one or more of the embodiments or examples. Additionally, a person in the art may combine different embodiments or examples described in this specification.

Although the embodiments of the present invention have been shown and described, changes, modifications, replacements, or variations can be made to the foregoing embodiments by a person of ordinary skill in the art without departing from the scope of the present invention.

### List of reference numerals:

1000, suspension system; 10000, vehicle;
1, linear motor;
10, rotor assembly; 11, excitation assembly; 12, guiding post; 121, guiding portion; 122, fixing portion; 13, shell; 13a, first chamber; 130, gas channel; 13b, second ventilation channel; 14, sliding bearing; 14a. first ventilation channel; 15, cover body;
20, stator assembly;
21, stator mandrel; 210, mandrel wall; 21a. accommodating groove; 21b, mounting opening; 21c, wiring space; 21d, connecting notch; 21e, guiding hole; 21f, second mounting hole; 21g, central hole; 21h, holding groove;
2101a, first cooling water channel; 21011a, first inflow water channel segment; 21012a, first outflow water channel segment;
2102a, second cooling water channel; 21021a, second inflow water channel segment; 21022a, second outflow water channel segment;
2103a, flow guiding channel; 210b, water channel opening;
212, second positioning piece; 213, limiting protrusion; 214, fixing protrusion; 216, water channel rib;
22, winding component; 221, first positioning piece; 2221, lead wire; 223, stator core; 2231, sub-core; 223a, placing groove; 223b, avoidance groove; 223c, bridge-type wire slot; 224, coil disc; 225, electrically insulating framework; 2251, guiding block; 2252, lower electrically insulating framework; 2253, upper electrically insulating framework;
23, covering member; 231, body portion; 232, cover plate; 24, occluder; 25, first clip connector; 26, buffering member;
30, electrically conductive assembly; 30a, first mounting hole;
31, electrically conductive member; 31a, welding port; 311, electrically conductive body; 312, electrically conductive pin;
32, electrically insulating member; 321, abutting rib; 322, body portion; 323, leg portion;
41, sensing member; 42, sensing head;
50, adapter; 51, first welding head; 52, second welding head;
60, water channel joint; 60a, avoidance space; 61, inflow end; 62, outflow end; 63, seat.

## Claims

1. A stator assembly (20), comprising:
a stator mandrel (21), the stator mandrel (21) having a mandrel wall (210), the mandrel wall (210) being internally provided with a cooling water channel extending along an axial direction of the mandrel wall (210), the mandrel wall (210) being provided with a water channel opening (210b) thereon, and the water channel opening (210b) being in communication with a first end of the cooling water channel; and
a winding component (22), the winding component (22) being sleeved on an outer periphery of the stator mandrel (21), wherein
the cooling water channel comprises a first cooling water channel (2101a), wherein the first cooling water channel (2101a) is arranged to exchange heat with the winding component (22), and wherein at least of a part of the first cooling water channel (2101a) has a cross-sectional area that is greater than the area of the water channel opening (210b).

2. The stator assembly (20) according to claim 1, wherein the water channel opening (210b) is formed by the cooling water channel extending through an axial first end of the mandrel wall (210).

3. The stator assembly (20) according to claim 2, wherein the cooling water channel further comprises a second cooling water channel (2102a); and in an axial direction of the stator mandrel (21), the second cooling water channel (2102a) and the first cooling water channel (2101a) are arranged in sequence, and the water channel opening (210b) is in direct communication with the second cooling water channel (2102a);
optionally wherein the cross-sectional area of the first cooling water channel (2101a) is greater than the cross-sectional area of the second cooling water channel (2102a);
optionally wherein the cross-sectional area of the second cooling water channel (2102a) is greater than the cross-sectional area of the water channel opening (210b).

4. The stator assembly (20) according to claim 3, wherein in a radial direction of the stator mandrel (21), the second cooling water channel (2102a) is arranged further outward compared with the first cooling water channel (2101a), a flow guiding channel (2103a) is provided between the first cooling water channel (2101a) and the second cooling water channel (2102a), and the wall thickness of the stator mandrel (21) at the flow guiding channel (2103a) is greater than the wall thickness of the stator mandrel (21) at a position where the first cooling water channel (2101a) is connected to the flow guiding channel (2103a).

5. The stator assembly (20) according to claim 3 or 4, wherein in a circumferential direction of the stator mandrel (21), a plurality of first cooling water channels (2101a) are provided along the circumferential direction, at least two first cooling water channels (2101a) are connected to the same second cooling water channel (2102a), and the sum of the cross-sectional areas of at least two first cooling water channels (2101a) is greater than the cross-sectional area of the same second cooling water channel (2102a) in communication therewith;
optionally wherein a reinforcing rib is arranged between two adjacent first cooling water channels (2101a).

6. The stator assembly (20) according to claim 4 or 5, wherein the first cooling water channel (2101a) comprises a first inflow water channel segment (21011a) and a first outflow water channel segment (21012a) spaced apart in the circumferential direction of the stator mandrel (21), and the first inflow water channel segment (21011a) is in communication with the first outflow water channel segment (21012a) at one end away from the water channel opening (210b).

7. The stator assembly (20) according to claim 6, wherein the second cooling water channel (2102a) comprises a second inflow water channel segment (21021a) and a second outflow water channel segment (21022a), an inlet end of the second inflow water channel segment (21021a) is in communication with an inlet of the water channel opening (210b), an outlet end of the second inflow water channel segment (21021a) is in communication with an inlet end of the first inflow water channel segment (21011a), an inlet end of the second outflow water channel segment (21022a) is in communication with an outlet end of the first outflow water channel segment (21012a), and an outlet end of the second outflow water channel segment (21022a) is in communication with an outlet of the water channel opening (210b);
optionally wherein the circumferentially corresponding central angle of the first inflow water channel segment (21011a) is a first center angle α, the circumferentially corresponding central angle of the second inflow water channel segment (21021a) is a second center angle β, and α>β; and/or wherein the circumferentially corresponding central angle of the first outflow water channel segment (21012a) is a first center angle α, the circumferentially corresponding central angle of the second outflow water channel segment (21022a) is a second center angle β, and α>β.

8. A linear motor (1), comprising:
a stator assembly (20) according to any one of claims 1 to 7; and
a rotor assembly (10), the rotor assembly (10) and the stator assembly (20) being movable relatively.

9. The linear motor (1) according to claim 8, further comprising:
an electrically conductive assembly (30), one end of the electrically conductive assembly (30) being connected to the winding component (22), the other end being configured to connect to a motor controller,
the cooling water channel further comprising a second cooling water channel (2102a), and the second cooling water channel (2102a) being configured to exchange heat with the electrically conductive assembly (30).

10. The linear motor (1) according to claim 8 or 9, further comprising: a detection device configured to detect the displacement of the rotor assembly (10);
optionally wherein the detection device comprises a sensing member (41) and a sensing head (42), the sensing member (41) is arranged on the stator mandrel (21), the sensing head (42) is arranged on the rotor assembly (10), and the sensing head (42) is coupled with the sensing member (41) to detect the position of the rotor assembly (10).

11. The linear motor (1) according to claim 10, wherein the sensing member (41) is arranged on an outer peripheral wall of the stator mandrel (21), the stator assembly (20) further comprises a covering member (23), and the covering member (23) is arranged on the stator mandrel (21) to cover the sensing member (41).

12. The linear motor (1) according to claim 11, wherein the outer peripheral wall of the stator mandrel (21) is provided with an accommodating groove (21a), and the sensing member (41) is located in the accommodating groove (21a);
optionally wherein a portion of the peripheral wall of the stator mandrel (21) is recessed inward to define the accommodating groove (21a), further optionally wherein an axial end of the accommodating groove (21a) is open to define a mounting opening (21b) for the sensing member (41), and the stator assembly (20) further comprises an occluder (24) for occluding the mounting opening (21b);
optionally wherein in the circumferential direction of the stator mandrel (21), the accommodating groove (21a) is staggered in position from the cooling water channel.

13. The linear motor (1) according to claim 11 or 12, wherein the covering member (23) is sleeved on the outer peripheral wall of the stator mandrel (21); and/or
wherein the covering member (23) comprises a body portion (231) and a cover plate (232), and the cover plate (232) is fixed to the body portion (231) and arranged radially facing the sensing member (41); and/or
wherein the sensing member (41) is a magnetic sensing member, and the covering member (23) is made of a non-magnetically conductive material.

14. A suspension system, comprising a linear motor (1) according to any one of claims 8 to 13.

15. A vehicle, comprising a suspension system according to claim 14.
